# EUROPEAN PATENT SPECIFICATION

(11) **EP 4 140 730 B1**
(45) Date of publication and mention of the grant of the patent: **08.01.2025**
(21) Application number: 22166793.4
(22) Date of filing: 05.04.2022
(51) Int. Cl.: A01K 1/01, A01K 1/015, B32B 7/04, B32B 7/08

(54) **ANIMAL BEDDING**
TIERBETTUNG
LITIÈRE POUR ANIMAUX

(30) Priority: 05.04.2021 US 202117222446; 27.09.2021 US 202117486311
(43) Date of publication of application: 01.03.2023
(73) Proprietor: LeapHigh Animals LLC, Las Vegas, Nevada 89115 (US)
(72) Inventor: HAHN, Sean Sangil, Henderson, 89052 (US); LEE, Si Hyung, Henderson, 89052 (US)
(74) Representative: Bates, Daniel Joseph

(56) References cited:
- EP-A1- 0 698 341
- WO-A1-2004/000544
- US-A1- 2020 267 929
- ANONYMOUS: "Buy Balku World Multipurpose Baby Mat in Set (Four Sheet Set) includes 3 Cotton Mats and 1 Waterproof sheet With Snap Button Baby Bed Protector Diaper Changing Travel friendly Mat with 4 Sheets and Snap Buttons Pink Color", AMAZON.IN, 30 December 2020 (2020-12-30), pages 1 - 6, XP093093222, Retrieved from the Internet <URL:https://www.amazon.in/Multipurpose-waterproof-Protector-Changingfriendly/dp/B08RRQRBPJ?th=l> [retrieved on 20231019]

## Description

### BACKGROUND

The domestic guinea pig is a common household pet. The guinea pig is docile by nature, friendly, and affectionate in response to handling and feeding. Care for the guinea pig typically includes a cage, such as a solid-bottom cage, and bedding added to the bottom of the cage. The bedding may include shredded paper, wood shavings, hay, or grass.
It is known from EP0698341 (Uni-Charm Corporation) to provide an absorbent composite panel comprising a liquid-absorbent panel and a liquid-impermeable backsheet. The top surface of the absorbent panel is partially covered along its peripheral edges with a liquid-impermeable overflow barrier strips, which are then bonded integrally to the backsheet along their outer side edges.
It is known from WO2004000544 (Michael Swain) to provide a containing mat for household liquid spills. An absorption member is freely disposed between first and second portions of the containment member, and held therein only by frictional forces resulting from surface tension between the containment member and the absorbent member.
It is known from US2020267929 (LeapHigh Animals) to provide animal bedding comprises a main section and a pocket. The main section includes a top layer, a middle layer and a bottom layer. The top layer is hydrophobic, the middle layer is hydrophilic and at least a part of the bottom layer is hydrophobic. The top layer, the middle layer and the bottom layer are attached to one another, such as via stitching along a perimeter of the main section.

The Balku World branded Multipurpose 3+1 Baby Mat consists of three padded cotton mats and one waterproof soft plastic sheet. One layer getting wet can be replaced with the second. The waterproof sheet can be attached on the top surface or at the bottom. Snap Button are provided on all the sheet for easy attachment. A soft foam filling in Cotton Mat protects from any rough surface. According to the invention there is provided an animal bedding according to the claims.
In the following, each of the described methods, apparatus, examples, and aspects, which do not fully correspond to the invention as defined in the claims is thus not according to the invention and is, as well as the whole following description, present for illustration purposes only or to highlight specific aspects or features of the claims.

### BRIEF DESCRIPTION OF THE DRAWINGS

The accompanying drawings, which are incorporated in and constitute a part of this specification, illustrate various aspects of the invention and together with the description, serve to explain its principles. Wherever convenient, the same reference numbers will be used throughout the drawings to refer to the same or like elements.
FIG. 1 is a front perspective view of the animal bedding.
FIG. 2A is a side cross-sectional view of another example of animal bedding illustrating a fleece layer, an absorbent layer, a 3D air mesh layer, and a waterproof layer, with the fleece layer, the absorbent layer, and the 3D air mesh layer stitched together so that a pattern is present on the top surface of the fleece layer.
FIG. 2B is a side cross-sectional view of another example of animal bedding illustrating the fleece layer, the absorbent layer, the 3D air mesh layer, and the waterproof layer, with the fleece layer and the absorbent layer (but not the 3D air mesh layer) stitched together so that a pattern is present on the top surface of the fleece layer.
FIG. 3A is a front perspective view of a first part of the animal bedding, with a pocket covering part of the top layer of the first part of the animal bedding, with a set of teeth for one part of a zipper, and with the top layer including a diamond stitching pattern.
FIG. 3B is a bottom perspective view of the first part of the animal bedding, illustrating the non-waterproof layer and the set of teeth for the one part of a zipper.
FIG. 3C is one example of a cross-sectional view of A-A' from FIG. 3A.
FIG. 3D is another example of a cross-sectional view of A-A' from FIG. 3A.
FIG. 4A is a bottom perspective view of a second part of the animal bedding, with a waterproof layer shown, and with a set of teeth for a second part of a zipper designed to mate with the first part of the zipper shown in FIGS. 3A-B.
FIG. 4B is a top perspective view of the second part of the animal bedding, illustrating the waterproof layer and the set of teeth for the second part of a zipper.
FIG. 5 is a side cross-sectional view of another example of animal bedding with two parts that are connected to one another via a zipper.
FIG. 6A is a second example of a front perspective view of a first part of the animal bedding reversibly attached to a second part of the animal bedding using a zipper, with a pocket covering part of the top layer of the first part of the animal bedding, with a set of teeth for one part of a zipper, and with the top layer including a diamond stitching pattern.
FIG. 6B is a cross-section of a part of the animal bedding shown in FIG. 6A.
FIG. 7A is a top perspective view of the second part of the animal bedding with a plurality of buttons for connection to the first part of the animal bedding illustrated in FIG. 7B.
FIG. 7B is a bottom perspective view of the first part of the animal bedding with a plurality of buttons for a mating connection to the second part of the animal bedding illustrated in FIG. 7A.
FIG. 8A is a top perspective view of the second part of the animal bedding with Velcro for connection to the first part of the animal bedding illustrated in FIG. 8B.
FIG. 8B is a bottom perspective view of the first part of the animal bedding with Velcro for a mating connection to the second part of the animal bedding illustrated in FIG. 8A.
FIG. 9A is a top perspective view of the second part of the animal bedding with a plurality of magnets for connection to the first part of the animal bedding illustrated in FIG. 9B.
FIG. 9B is a bottom perspective view of the first part of the animal bedding with opposite polarity of a plurality of magnets for connection to the second part of the animal bedding illustrated in FIG. 9A.
FIG. 9C is a cross-section of a second part of the animal bedding shown in FIG. 9A.
FIG. 9D is a cross-section of a first part of the animal bedding shown in FIG. 9B.

### DETAILED DESCRIPTION OF EMBODIMENTS

### Overview

Domesticated animals typically have some type of animal bedding. For example, guinea pigs typically thrive in an environment that has suitable bedding. However, typical guinea pig bedding suffers from several drawbacks. First, typical bedding, such as wood or shredded paper, results in the guinea pig living in its waste (e.g., urine and feces), leading to a potentially unhealthy situation. For example, the guinea pig may develop bumblefoot (i.e., pododermatitis) if the guinea pig's feet are exposed to its own waste in the wood or shredded paper. Second, wood or shredded paper results in a considerable amount of waste. Third, wood or shredded paper, needing to be replaced periodically, resulting in a big expense. Fourth, guinea pigs tend to jerk and leap into the air (typically term "popcoming"), resulting in waste/bedding being kicked out of the cage and into the household. Fifth, paper or wooded bedding may cause dust to be present in the environment. Since small animals, such as guinea pigs, are very close to the ground, the animals' noses may inhale the dust, causing respiratory-related diseases, such as URI (upper respiratory infection). As discussed further below, using fleece, which naturally does not have dust and has static properties to attract dust (which may be generated from hay, the guinea pigs' main source of food) from the environment, may reduce the dust exposure to the animals and, in turn, reduce incidence of respiratory-related diseases.

Various forms of animal bedding are envisioned. The below discussion focuses on guinea pig bedding. Nevertheless, any discussion regarding guinea pig bedding may be equally applied to other forms of animal bedding. Further, any discussion regarding animal bedding may include a pocket on the upper surface or may not include a pocket on the upper surface. In this regard, any discussion below regarding animal bedding with a pocket may equally be applied to the described animal bedding without a pocket. Conversely, any discussion below regarding animal bedding without a pocket may equally be applied to the described animal bedding with a pocket. Thus, in one implementation, the animal bedding includes a main section. In another implementation, the animal bedding includes a main section and a pocket. In a first specific implementation, the main section comprises three layers, including a top layer, a middle layer, and a bottom layer. In a second specific implementation, the main section consists of the three layers.

The top layer may be made from a variety of materials. In one implementation, the top layer is composed of a material that is hydrophobic (e.g., tending to repel or fail to mix with water). In an alternate implementation, the top layer is composed of a material that is hydrophilic (e.g., tending to attract water). In still an alternate implementation, the top layer is composed of a blend of materials, with one material in the blend being hydrophilic and another material in the blend being hydrophobic (e.g., polyester/cotton blend). For example, one type of material for the top layer may comprise a synthetic fiber, such as a fabric woven or knitted from polyester (or other type of polymer) thread or yarn, a blend of polyester (or other type of polymer) with another material (e.g., cotton), or the like. One example material for the top layer is fleece, which may comprise a hydrophobic material. Fleece may come in different thicknesses, such as micro, 100, 200, and 300 grams per square meter (gsm), with 300 gsm being the thickest and least flexible and 100 gsm being less flexible. Further, fleece, may be made from polyester or other type of polymer. Alternatively, the top layer may comprise a plant-derived fiber, such as cotton or bamboo, which exhibit hydrophilic properties.

In one implementation, the middle layer may comprise a material that at least partly absorbs liquid (e.g., a hydrophilic material that attracts water). Specifically, the middle layer may comprise a material that is configured to break the liquid's surface tension so that the liquid moves into the spaces between fibers of the material, and into the fibers themselves. For example, the middle layer may comprise a cellulose-based material. Examples of cellulose-based materials include, but are not limited to: cotton; hemp; or bamboo. Other types of cellulose-based materials are contemplated. In the example of the middle layer being composed of bamboo, in one implementation, the middle layer may be entirely composed of bamboo. Alternatively, the middle layer may be composed of a bamboo blend (e.g., bamboo blended with polyester or other synthetic material). Various blends of bamboo may be used. In one implementation, the various blends of bamboo include: at least 30% bamboo and at most 70% of an alternate material (such as polyester or other synthetic fiber); at least 40% bamboo and at most 60% of an alternate material (such as polyester or other synthetic fiber);at least 60% bamboo and at most 40% of an alternate material (such as polyester or other synthetic fiber); at least 70% bamboo and at most 30% of an alternate material (such as polyester or other synthetic fiber); at least 75% bamboo and at most 25% of an alternate material (such as polyester or other synthetic fiber); at least 80% bamboo and at most 20% of an alternate material (such as polyester or other synthetic fiber); at least 85% bamboo and at most 15% of an alternate material (such as polyester or other synthetic fiber); at least 90% bamboo and at most 10% of an alternate material (such as polyester or other synthetic fiber); at least 95% bamboo and at most 5% of an alternate material (such as polyester or other synthetic fiber). In another implementation, the various blends of bamboo include: at least 30% bamboo and at most 70% of alternate materials (such as a blend of cotton fiber and polyester or other synthetic fiber); at least 40% bamboo and at most 60% of alternate materials (such as a blend of cotton fiber and polyester or other synthetic fiber);at least 60% bamboo and at most 40% of alternate materials (such as a blend of cotton fiber and polyester or other synthetic fiber); at least 70% bamboo and at most 30% of alternate materials (such as a blend of cotton fiber and polyester or other synthetic fiber); at least 75% bamboo and at most 25% of alternate materials (such as a blend of cotton fiber and polyester or other synthetic fiber); at least 80% bamboo and at most 20% of alternate material (such as a blend of cotton fiber and polyester or other synthetic fiber); at least 85% bamboo and at most 15% of alternate materials (such as a blend of cotton fiber and polyester or other synthetic fiber); at least 90% bamboo and at most 10% of alternate materials (such as a blend of cotton fiber and polyester or other synthetic fiber); at least 95% bamboo and at most 5% of alternate materials (such as a blend of cotton fiber and polyester or other synthetic fiber). Bamboo (or bamboo blends) exhibit good hydrophilic properties, thereby attracting water (or urine) from the animal. In still an alternate implementation, the middle layer may be composed entirely of cotton.

Thus, in one implementation, the middle layer may consist of a single material. As one example, the material may entirely consist of bamboo, as discussed above. As another example, the material may entirely consist of a synthetic material. One specific example of a synthetic material is a microfiber. Specifically, a microfiber is a synthetic fiber that is finer than one denier or decitex/thread, and may have a diameter of less than ten µm. Microfibers may be made from polyesters, polyamides (e.g., nylon, a para-aramid synthetic fiber (e.g., Kevlar^{®}), a meta-aramid material (e.g., Nomex^{®}), trogamide), or a conjugation of polyester, polyamide, and polypropylene.

In an alternate implementation, the middle layer may comprise a composite material (e.g., a blend of materials). As one example, the composite blend may comprise a cellulose fiber and a non-cellulose fiber (e.g., cellulose fibers and poly microfibers, such as bamboo (or other natural fiber) blended with a synthetic fiber). As another example, the composite blend may comprise two or more types of cellulose fibers (e.g., bamboo/cotton blend). In one implementation, the bamboo may comprise bamboo pulp fiber.

In one implementation, at least a part of the bottom layer may be waterproof and/or at least partially water repelling (such as completely water repelling). For example, at least a part, such as one or more surfaces of the bottom layer, may be hydrophobic. The bottom layer may comprise a material with a plastic coating or laminate. The material may be composed of cotton, synthetic (e.g., polyester), or a cotton/synthetic blend (e.g., polyblend). The material may be coated or laminated with polyurethane laminate (PUL), commonly known as PUL Fabric. In one implementation, at least one side of the bottom layer has a laminate (such as PUL). In a first specific implementation, the side of the bottom layer closer to the middle layer is the side with the laminate. Specifically, when assembled, the laminate side of the bottom layer touches or contacts the middle layer, as discussed below. In a second specific implementation, the side of the bottom layer further from the middle layer is the side with the laminate. Specifically, when assembled, the laminate side of the bottom layer does not touch or contact the middle layer (and instead contacts the ground). In a third specific implementation, both sides of the bottom layer include the laminate. Thus, in one implementation, the bottom layer is composed of a material that is hydrophobic. In an alternate implementation, the bottom layer is composed of a material that is hydrophilic. In still an alternate implementation, the bottom layer is composed of a blend of materials, with one material in the blend being hydrophilic and another material in the blend being hydrophobic (e.g., polyester/cotton blend).

In this way, fluid, such as urine, may pass through the top layer and be absorbed in the middle layer. Further, the fluid that is in the middle layer may remain in the middle layer without passing through to the bottom layer (such as due to the laminate in the bottom layer).

In one implementation, the top layer, the middle layer, and the bottom layer are attached to one another. In a specific implementation, the top layer, the middle layer, and the bottom layer are stitched together along a perimeter, as described in more detail below.

In an alternate implementation, in addition to attaching the top layer, the middle layer and the bottom layer together, the top layer and middle layer (but not the bottom layer) are attached together separately. In a first specific implementation, the means of attachment of the top layer, the middle layer and the bottom layer is the same as the separate means of attachment of the top layer and the middle layer. For example, stitching may be used to attach the top layer, the middle layer, and the bottom layer together, and stitching may also be used to separately attach the top layer and the middle layer. In a second specific implementation, the means of attachment of the top layer, the middle layer and the bottom layer is different than the separate means of attachment of the top layer and the middle layer.

As discussed above, the location for attachment of the top layer, middle layer, and bottom layer are different from the location for separate attachment for the top layer and middle layer. For example, the top layer, middle layer, and bottom layer may be attached along a periphery or perimeter of the main section, as discussed above, and the top layer and middle layer may be separately attached in an interior of the main section. Further, the separate attachment of the top layer and middle layer may be in a pattern. For example, the stitching that attaches the top layer and middle layer may create a diamond pattern, square pattern, or the like as viewed on the top layer.

The separate attachment of the top layer to the middle layer may result in quilting. Quilting may result in one or more benefits. First, the middle layer, such as the bamboo or bamboo blend, even if the material (e.g., the bamboo) in the middle layer loosens, the middle layer will not shift significantly due to the quilting. Second, the quilting may hold the top layer and middle layer together better. Third, hay (or other debris) stuck in the top layer material (e.g., in the fleece material of the top layer) may be more easily removed because of the quilting.

In one implementation, a pocket may be attached to the main section (e.g., attached to at least one side or one edge of the main section). For example, the pocket may be attached on three sides or three edges to the main section, with the fourth side or fourth edge of the pocket being used as an opening for the animal to enter/exit the pocket. As another example, the pocket may be attached on two sides or two edges to the main section (such as to only two sides or two edges that meet in a corner of the main section). As still another example, the pocket may be attached to only one side or one edge of the main section. Certain animals, such as guinea pigs, are prey animals. In the wild, guinea pigs spend time underground. The pocket allows the guinea pig to burrow therein, where it is considered safe and dark. In one manner of manufacture, the three layers are attached to one another to form the main section, and thereafter, the pocket is attached to the main section. The method of attachment (e.g., stitching) for the three layers to form the main section may be the same method of attachment (e.g., stitching) for attaching the pocket to the main section. For example, the three layers may be stitched along a periphery to form the main section. Likewise, the pocket may be stitched along at least a part of the same periphery (such on three sides of the pocket) in order to attach the pocket to the main section. Alternatively, the method of attachment for the three layers to form the main section may be different from the method of attachment for attaching the pocket to the main section. Further, when the pocket is attached to the main section, the pocket may abut the top layer of the main section. Further, flipping back the pocket behind the main section results in the pocket abutting the bottom layer of the main section. In addition, in one implementation, the pocket may be constructed of the same material as the top layer. For example, the pocket may be constructed of a fleece material similar to the top layer. As discussed below, any embodiments disclosed herein without a pocket may alternatively include a pocket. Conversely, any embodiments disclosed herein with a pocket may alternatively not include a pocket.

Each fleece layer may include a softer side and a rougher side. Given this, the pocket may be formed such that only the softer side of the fleece material is exposed to the guinea pig. In one example, two fleece layers may be sewn together such that both sides of the pocket (e.g., the top side of the pocket (which the guinea pig touches when sitting on the pocket) and the underside of the pocket (which the guinea pig touches when burrowing in the pocket)) have the softer side of the fleece material exposed. Alternatively, a single fleece layer may be folded over such that both sides of the pocket have the softer side of the fleece material exposed. In contrast, the top layer may be constructed of one layer of fleece material, with the softer side of the fleece material abutting the pocket (and exposed to the guinea pig when the guinea pig is burrowing in the pocket or sitting on the main section) and the other side of the fleece material (e.g., the rougher side) abutting the middle layer (and therefore not exposed to the guinea pig). In still an alternate implementation, the pocket may be composed of 200-250 gsm fleece, whereas the top layer may be composed of 100-150 gsm fleece. Alternatively, the pocket may be composed of 200-300 gsm fleece, whereas the top layer may be composed of 100-150 gsm fleece. In this way, the top layer and the pocket may be formed of the same material; however, the configuration of the material for the pocket (e.g., such that two layers of fleece are used) may be different than the configuration of the top layer (e.g., such that a single layer of fleece is used).

As discussed below, various types of connections, bindings, or attachments for the materials are contemplated. In one embodiment, a permanent or non-reversible connection, binding or attachment may comprise stitching, such as needle-and-thread stitching and/or ultrasonic stitching (interchangeably termed ultrasonic sewing). Other types of permanent or non-reversible connections, bindings or attachments are contemplated. In this regard, any discussion below regarding stitching may be equally applied to any permanent or non-reversible connection, binding or attachment.

Alternatively, reversible or non-permanent connections, binding or attachment is contemplated. Merely by way of example, any one, any combination, or all of the following reversible connections may be used including: zippers; buttons; snaps; magnets; or Velcro. In this way, in animal bedding that includes a reversible connection (e.g., zippers; buttons; snaps; magnets; or Velcro) to attach a first part of the animal bedding with a second part, the animal bedding may include a more permanent type of attachment, connection, binding or the like (e.g., such as stitching).

In an alternate embodiment, the animal bedding may include at least one supporting layer configured to perform any one, any combination, or all of: (i) providing cushioning for the animal when resting on the animal bedding; (ii) helping circulate air so that an absorbent layer (such as an interior absorbent layer) dries quicker (e.g., after the animal urinates and/or after the animal bedding is washed); or (iii) reducing shrinkage of the absorbent layer (e.g., the absorbent layer may be attached or connected (such as via stitching) to a more rigid layer so that absorbent layer may retain its shape more after washing of the animal bedding). In this regard, the supporting layer may include any one, any combination, or all of the following: (A) more rigidity than the absorbent layer; (B) thicker than the absorbent layer; or (C) larger air pockets than in the absorbent layer.

Various supporting layers are contemplated including any one, any combination, or all of: a 3-D mesh layer (which may be any one, any combination, or all of: more rigid than the absorbent layer in order to reduce shrinkage of the absorbent layer, thicker than the absorbent layer for cushioning, and include larger air pockets to assist in drying the absorbent layer); one or more sponges (which may be any one, any combination, or all of: more rigid than the absorbent layer in order to reduce shrinkage of the absorbent layer, thicker than the absorbent layer for cushioning, and include larger air pockets for drying); corrugated-type plastic and/or rubber material (for rigidity and/or cushioning and/or drying); honeycomb pattern sheet comprising (or alternatively consisting) of rubber material (for rigidity and/or cushioning and/or drying); open cell material (e.g., open-cell rubberized or polyurethane material); closed cell material (e.g., closed cell rubberized or polyurethane material); or gel-type material (for rigidity and/or cushioning).

In a first embodiment, the animal bedding includes an upper layer upon which the animal may rest, one or more absorbent layers (e.g., bamboo and/or cotton and/or synthetic material) configured to absorb at least a part of the urine from the animal, and one or more supporting layers. In a first sub-embodiment, the upper layer, the absorbent layer, and the supporting layer are each connected or attached to one another. In one particular example, stitching may be used to stitch the upper layer, the absorbent layer, and the supporting layer together. As one example, the stitching may go through each of the upper layer, the absorbent layer, and the supporting layer (e.g., stitching on at least a part of the periphery (such as connecting upper layer, absorbent layer, and supporting layer along at least two sides, at least three sides, or on all sides) and/or on an interior (such as connecting upper layer and absorbent layer only or connecting each of upper layer, absorbent layer, and supporting layer) to form a pattern on the upper layer. As a second example, first stitching may go through the upper layer and the absorbent layer to form a pattern on the upper layer and second stitching (such as around a periphery) through the absorbent layer and the supporting layer. As another example, other types of connection means may be used to connect each of the upper layer, the absorbent layer, and the supporting layer together. In a second sub-embodiment, the absorbent layer and the supporting layer are each connected or attached to one another, but one or both of the absorbent layer or the supporting layer are not attached to the upper layer. The animal bedding in the first embodiment may include at least a part any one, any combination, or all of the upper layer, the absorbent layer, or the supporting layer being at least partly hydrophobic. For example, at least a part of the supporting layer (such as an underside of the supporting layer having a PUL coating thereon, with the underside being opposite to the side of the supporting layer that directly contacts the absorbent layer or to the side of the supporting layer that is closer to the absorbent layer) may be hydrophobic.

In a second embodiment, the animal bedding includes an upper layer upon which the animal may rest, an absorbent layer (e.g., bamboo and/or cotton and/or synthetic material) configured to absorb at least a part of the urine from the animal, the supporting layer, and a lower layer that is at least partly hydrophobic.

According to the invention, the animal bedding comprises a first part that is reversibly attached to a second part. The reversible attachment may comprise any one, any combination, or all of: zipper(s); magnet(s); Velcro; buttons; or snaps. The first part may include one or more layers, such as any one, any combination, or all of: an upper layer (upon which the animal rests); an absorbent layer (which may be composed of bamboo, cotton, and/or synthetic material); or a protective layer (which may protect the absorbent layer). The second part includes waterproof layers, and may include any one, any combination, or all of: cushion layer(s); or rigid layer(s). According to the invention, the waterproof layers of the second part are attached to one another, and form a cavity therein to house one or both of the cushion layer(s) or the rigid layer(s).

Moreover, various shapes of the animal bedding are contemplated. For example, the animal bedding may be rectangular in shape, such as illustrated in the figures of the present application. Alternatively, the animal bedding may be any other shape, including square, triangular, circular, or the like.

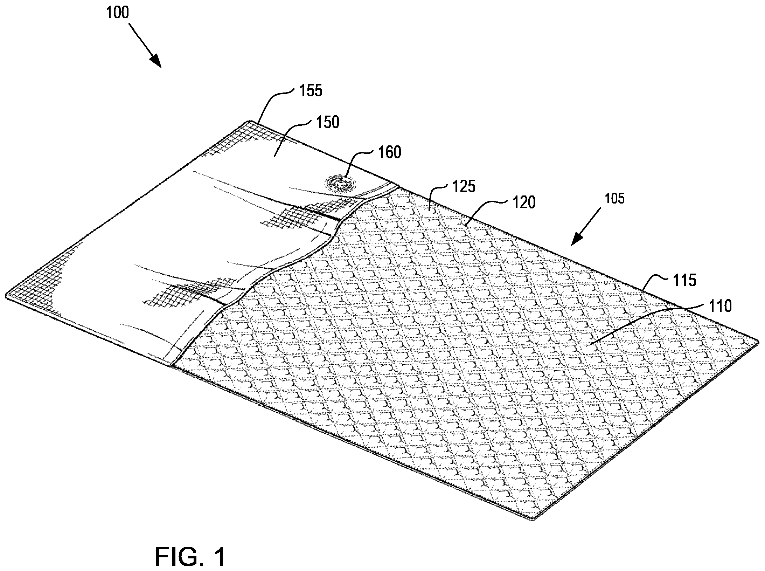

Referring to the figures, FIG. 1 is a front perspective view of the animal bedding 100. As discussed above, the top layer 110 may be made from a variety of materials, such as hydrophobic materials. Example materials include synthetic fibers (e.g., fleece) or synthetic blends. Likewise, the middle layer 130 may be made from a variety of materials, such as hydrophilic materials. Example materials include cellulose-based materials, such as bamboo or bamboo blends. The bottom layer 140 likewise may be made from a variety of materials, such as materials, with at least part of which are waterproof and/or water repelling. For example, the bottom layer may be composed of a fabric. In one implementation, the fabric for the bottom layer may be composed of cotton, synthetic (e.g., polyester), or a cotton/synthetic blend (e.g., polyblend), with a plastic coating or laminate applied to a side facing the middle layer, as discussed further below.

The top layer 110, middle layer 130, and bottom layer 140 may be connected or attached together in one of several ways. In one way, stitching may connect the top layer 110, middle layer 130, and bottom layer 140 together. For example, FIG. 1 illustrates stitching 115 around an entire perimeter of main section 105. Alternatively, stitching may be less than the entire perimeter. Further, separate from attaching the top layer 110, middle layer 130, and bottom layer 140 together, at least two of the components of the main section (but not the third component of the main section) may be connected together as well. For example, top layer 110 and middle layer 130 (but not bottom layer 140) may be connected separately. For example, stitching 120 may connect top layer 110 and middle layer 130, as illustrated in FIG. 1. Stitching 120 may be in an interior of main section 105, such as interior to the perimeter of main section. In this regard, stitching 120 (connecting top layer 110 and middle layer 130) is in a different part of main section 105 than stitching 115 (connecting top layer 110, middle layer 130, and bottom layer 140). Further, stitching 120 results in quilting 125 or bunching of the middle layer 130. Various patterns of stitching of the top layer 110 and middle layer 130 are contemplated, such as a diamond shaped pattern, a wave shaped pattern, and/or a zigzagged shaped pattern.

In particular, stitching may connect any one, any combination, or all of: the top layer, the middle layer(s); and the bottom layer. Further, stitching may be along part or all of a periphery of main section (e.g., along only one side of the periphery of the main section, only two sides of the periphery of the main section, only three sides of the periphery of the main section, or on all four sides periphery of the main section. Separate from stitching, other stitching may connect the top layer and the one or more middle layers. Specifically, vertical stitching and horizontal stitching may form a grid of squares (or other type of quadrilateral) that connects top layer and middle layer, but not bottom layer.

Pocket 150 may also be attached to main section 105, such as by stitching along three sides 165, 170, 175 of pocket 150. Fourth side 180 of pocket 150 is not attached to main section 105. In one implementation, pocket 150 is less than half the surface area of main section 105 (e.g., pocket 150 may be ¼ or less than ¼ of the surface area of main section 105). As discussed below, in one implementation, pocket 150 may be attached to all of top layer 110, middle layer 130 and bottom layer 140. Alternatively, pocket 150 may be attached only to top layer 110 but not to middle layer 130 or bottom layer 140. Still alternatively, pocket 150 may be attached to top layer 110 and middle layer 130, but not to bottom layer 140.

For example, pocket 150 may be connected to top layer 110 (and optionally middle layer 130 and/or bottom layer 140) via stitching. For implementations without pocket 150, stitching may attach top layer 110, middle layer 130, and bottom layer 140 together. Stitching may be along the edge of any one, any combination, or all of the four sides. Separate from stitching, stitching may connect top layer 110 and middle layer 130. Further, the stitching along the periphery may be different from the stitching in the interior. By way of example, the stitching along the peripheral may comprise needle-and-thread stitching whereas the stitching in the interior may comprise ultrasonic stitching (interchangeably termed ultrasonic sewing). As another example, the stitching along the peripheral may comprise ultrasonic stitching (interchangeably termed ultrasonic sewing) whereas the stitching in the interior may comprise needle-and-thread stitching. Still alternatively, the stitching on the periphery and in the interior may be the same type of stitching (e.g., both being ultrasonic stitching (interchangeably termed ultrasonic sewing) or both being needle-and-thread stitching). As such, the stitching in the interior may comprise a regular pattern in the interior. As discussed above, the pattern may comprise a diamond pattern, a wave pattern, a zig-zag pattern, or the like.

The following are examples of the materials, weights, thickness details of various parts of the animal bedding. The examples are merely for illustration purposes. For example, the pocket (or pocket layer) may comprise the following: term of the material: 100% Polyester; weight: 250 gsm; thickness: 0.7 mm. The top layer may comprise the following: term of the material: 100% Polyester; weight: 180 gsm; thickness: 0.48 mm. In the example of the middle layer being composed of a bamboo absorbent layer: term of the material: Bamboo fiber batting; weight: 400 gsm; thickness: 1cm; blend: Bamboo fiber 70%, polyester 30%. As discussed above, various percent bamboo blends are contemplated. As another example, the waterproof bottom layer may comprise the following: term of the material: 100% Polyester; total weight: 130 gsm; overall thickness (including material and laminate): 0.44 mm; laminate weight: 40 gsm; laminate thickness: 0.02 mm; non-laminate material thickness: 0.42 mm; non-laminate material weight: 90 gsm.

As discussed above, one or more layers may be positioned between the top layer and the bottom layer. For example, the top layer may be composed of a variety of materials, such as material that is hydrophobic, material that is hydrophilic, or a blend of materials (such as one material in the blend being hydrophilic and another material in the blend being hydrophobic). The one or more middle layers may comprise at least one middle layer that at least partly absorbs liquid (e.g., a hydrophilic material that attracts water). In one or some embodiments, the bottom layer may be waterproof and/or at least partially water repelling (such as completely water repelling).

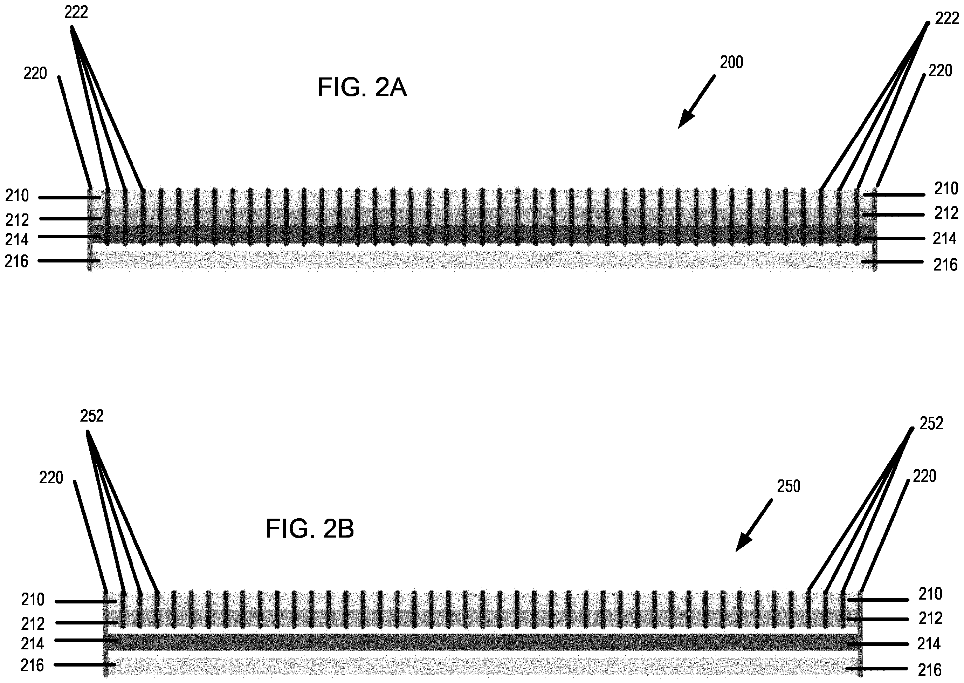

FIG. 2A is a side cross-sectional view 200 of another example of animal bedding illustrating a fleece layer 210 (which is an example of the top layer), an absorbent layer 212 (which is one example of one of the one or more middle layers and comprises a hydrophilic material), a 3D air mesh layer 214 (which is another example of one of the one or more middle layers that may act as a supporting layer), and a waterproof layer 216 (which is an example of the bottom layer). Separate from, or in addition to, 3D air mesh layer 214, supporting layer(s) may be include any one, any combination, or all of: one or more sponges; corrugated-type plastic and/or rubber material; honeycomb pattern sheet comprising (or alternatively consisting) of rubber material; open cell material; closed cell material; or gel-type material.

The fleece layer 210, the absorbent layer 212, and the 3D air mesh layer 214 are stitched together using stitching 222 so that a pattern is present on the top surface of the fleece layer 210. An example of the pattern comprises a diamond shaped pattern, such as illustrated, for example, in FIG. 1. Other patterns are contemplated, as discussed above.

FIG. 2A further illustrates stitching 220. Thus, FIG. 2A illustrates two attachments, with a first attachment (e.g., stitching 220) that attaches the top layer (e.g., fleece layer 210) with the bottom layer (e.g., waterproof layer 216) and with a second attachment (e.g., stitching 222) that attaches the top layer (e.g., fleece layer 210) with the one or more middle layers (e.g., both the absorbent layer 212 and the 3D air mesh layer 214). As shown, stitching 220 also connects the absorbent layer 212 and the 3D air mesh layer 214 with the waterproof layer 216. Stitching 220 may be along at least a part of the periphery of the animal bedding, such as along an entirety of the periphery of the animal bedding (e.g., such as similar to stitching 115 around an entire perimeter of main section 105). Alternatively, or in addition, stitching 222 may be such that a pattern may be present on at least a part of the surface of the fleece layer 210, such as at least over 50% of the surface of the fleece layer 210, at least over 60% of the surface of the fleece layer 210, at least over 70% of the surface of the fleece layer 210, at least over 80% of the surface of the fleece layer 210, at least over 90% of the surface of the fleece layer 210, or 100 % of the surface of the fleece layer 210.

Thus, FIG. 2A illustrates that 3D air mesh layer 214 is positioned between absorbent layer 212 and waterproof layer 216. In one embodiment, there may be no other layers so that 3D air mesh layer 214 is sandwiched directly between absorbent layer 212 and waterproof layer 216. Alternatively, one or more layers may be positioned on either side of 3D air mesh layer 214 (e.g., one or more layers between 3D air mesh layer 214 and absorbent layer 212 and/or one or more layers between 3D air mesh layer 214 and waterproof layer 216) so that 3D air mesh layer 214 is sandwiched indirectly between absorbent layer 212 and waterproof layer 216.

3D air mesh layer 214 may include one or more qualities, such as one or both of: (1) greater rigidity (e.g., the 3D air mesh layer 214 is more rigid (e.g., has less flexibility) than any one, any combination, or all of fleece layer 210, absorbent layer 212 or waterproof layer 216); and (2) at least partly repel water. 3D air mesh layer 214 may include gaps (such as air gaps resulting in a 3D air mesh) within the 3D structure (e.g., a honeycomb structure), such that the 3D air mesh layer 214 may comprises any one of the following solid/air structures: 90% structure vs. 10% air; 80% structure vs. 20% air; 70% structure vs. 30% air; 60% structure vs. 40% air; 50% structure vs. 50% air; 40% structure vs. 60% air; 30% structure vs. 70% air; 20% structure vs. 80% air; or 10% structure vs. 90% air. 3D air mesh layer 214 may be composed of a variety of material. As one example, 3D air mesh layer 214 may be composed of polyester.

In one or some embodiments, 3D air mesh layer 214 may be composed of at least two separate fabric layers knitted together. Alternatively, 3D air mesh layer 214 may be composed of at least three separate fabric layers knitted together (e.g., in a three fabric layer 3D air mesh layer 214, a face and a back may be connected by a monofilament yarn to produce a connecting cushion). Still alternatively, 3D air mesh layer 214 may be composed of at least four separate fabric layers knitted together. In one or some embodiments, each layer of the 3D air mesh layer 214 may be knitted simultaneously by a single machine. An example disclosure of cushioning fabric is in US Patent Application Publication No. 2004/0216328 A1. Examples of mesh fabric are disclosed in US Patent No. 10,273,608, US Patent No. 6,818,571, and US Patent No. 6,804,978. In one or some embodiments, the 3-D mesh layer comprises 2 or more layers of fabric (e.g., at least 3 separate layers of fabric) that is connected or knitted together (e.g., via vertical fibers, such as vertical plastic fibers). Thus, in one or some embodiments, the 3D air mesh layer 214 may comprise three-dimensional mesh fabric, which may be a special type of knitted spacer fabric, with sandwich structure comprising (or consisting of) two separate meshed multifilament outer layers linked together with a layer of spacer monofilaments.

In one or some embodiments, the 3D air mesh layer 214 may have a thickness that is greater than any one, any combination, or all of fleece layer 210, absorbent layer 212, and waterproof layer 216 (though not as depicted in FIGS. 2A-B). In particular, the 3D air mesh layer 214 may have a thickness that is at least two times greater than any one, any combination, or all of fleece layer 210, absorbent layer 212, and waterproof layer 216 (e.g., in one embodiment, 3D air mesh layer 214, having multiple layers of fabric sewn together, may be at least two times thicker than fleece layer 210 and/or absorbent layer 212). Alternatively, instead of (or in addition to) 3D air mesh layer 214, compressible foam may be used.

3D air mesh layer 214 may result in one or more of the following benefits. First, 3D air mesh layer 214 may act as a cushion resulting in the animal bedding being softer. In this regard, 3D air mesh layer 214 is an example of a cushion layer. This may be beneficial in that the animal bedding is more comfortable for guinea pigs and better for the guinea pigs' joints (e.g., more comfortable bedding may be beneficial for older guinea pigs that already suffer from joint problems and for younger guinea pigs to avoid future joint problems). Second, 3D air mesh layer 214 may provide further rigidity for the animal bedding, so that the animal bedding may keep its shape during washing (e.g., the absorbent layer 212, which may be composed of bamboo and comprise a bamboo layer or a bamboo blend layer, may tend to shrink; the 3D air mesh layer 214 may counteract that tendency). Third, cleaning may be easier with 3D air mesh layer 214. As one example, 3D air mesh layer 214, with its holes therein, may create an air gap, which may help with the washing and the drying of the absorbent layer 212. As another example, the air gap created by 3D air mesh layer 214 may assist in drying of urine (e.g., because of the air gap, urine may dry quicker and may spread better, thereby potentially reducing the smell).

3D air mesh layer 214 may be connected to any one, any combination, or all of fleece layer 210, absorbent layer 212 and waterproof layer 216 in one of several ways. In one way, stitching 220 may connect 3D air mesh layer 214 to all of fleece layer 210, absorbent layer 212 and waterproof layer 216. Alternatively, or in addition, stitching may connect 3D air mesh layer 214 to one or both of the fleece layer 210 and the absorbent layer 212 (FIG. 2A illustrates that stitching 222 attaches 3D air mesh layer 214 to both of fleece layer 210 and absorbent layer 212; in contrast, FIG. 2B illustrates that stitching 252 does not attach 3D air mesh layer 214 to both of fleece layer 210 and absorbent layer 212). Further, in one embodiment, a gap is present on one or both sides of 3D air mesh layer 214 (e.g., FIG. 2A illustrates a gap on a first side of 3D air mesh layer 214 facing absorbent layer 212 and on a second side facing waterproof layer 216). Alternatively, a gap is not present on either side of 3D air mesh layer 214.

Any one, any combination, or all of the fleece layer 210, the absorbent layer 212, the 3D air mesh layer 214, the waterproof layer 216 or a pocket (such as illustrated in FIG. 1) may be coated with an antimicrobial agent or solution. As discussed above, guinea pigs may be vulnerable to bacterial infection. As such, an antimicrobial agent may be added to one or more of the layers, such as the absorbent layer 212 (and potentially to the fleece layer 210 and/or to the 3D air mesh layer 214). An example of an antimicrobial agent comprises SILVADUR^{™} from DuPont. See https://www.dupontnutritionandbiosciences.com/silvadur.html. Other an antimicrobial agents are contemplated. The antimicrobial agent may be applied by padding, exhaustion, printing, or spray application, such as during the manufacture of the absorbent layer 212.

Waterproof layer 216 may be waterproof on one or more its sides. In one or some embodiments, waterproof layer 216 may be waterproof (or water resistant) on only one side, such as by applying a laminate (e.g., PUL) on the side that faces 3D air mesh layer 214 (whether or not there are intervening layers between 3D air mesh layer 214 and waterproof layer 216). Alternatively, waterproof layer 216 may be waterproof on only two of its sides. In particular, a laminate may be applied to both sides of the waterproof layer 216, such as the one side facing 3D air mesh layer 214 and the opposite side (e.g., the side that contacts the ground). Still alternatively, waterproof layer 216 may be waterproof on all of its sides.

FIG. 2B is a side cross-sectional view 250 of another example of animal bedding illustrating the fleece layer 210, the absorbent layer 212, the 3D air mesh layer 214, and the waterproof layer 216, with the fleece layer 210 and the absorbent layer 212 (but not the 3D air mesh layer 214) stitched together with stitching 252 so that a pattern is present on the top surface of the fleece layer 210. Thus, FIG. 2B differs from FIG. 2A in that stitching 222 stitches each of the fleece layer 210, the absorbent layer 212, the 3D air mesh layer 214 together whereas stitching 252 stitches the fleece layer 210 and the absorbent layer 212 together but not the 3D air mesh layer 214.

Though not illustrated in FIGS. 2A-B, in one or some embodiments, a pocket may be included (such as illustrated in FIG. 1). As discussed above, the pocket may be less than half the surface area of the top layer (such as half the surface of fleece layer 210). The pocket may be attached to the top layer (such as fleece layer 210) along one or more side of the pocket (such as along three of the sides of the pocket) via stitching 220. Alternatively, no pocket is included.

As discussed above, various parts of the animal bedding may be attached together. According to the invention, the attachment comprises a connection device that is composed of two parts and is designed so that the end-user can detach the two parts and then re-attach the two parts. An example of such an attachment that is a connection device comprises a zipper, clasp snap buttons, or other type of binding device used to bind edges of parts of the animal bedding together. As discussed in more detail below, for cleaning, the end-user may detach the two parts and clean one or both of the parts separately. For example, the animal bedding may be composed (or consist) of a first part and a second part, with the first part and the second part being attached together via a zipper (or the like). In the case of a zipper, the attachment may include two mating pieces, such as a first set of teeth and a second set of teeth that are made to interdigitate thereby linking the first set of teeth with the second set of teeth. In order to bind the first part with the second part using the zipper, the first set of teeth may be sewn into the edge of the first part (such as along an entire perimeter or along substantially the entire perimeter of the edge of the first part) and the second set of teeth may be sewn into the edge of the second part (such as along an entire perimeter or along substantially the entire perimeter of the edge of the second part). In this way, the zipper (which acts as an attachment) is configured to attach the first part to the second part in one configuration such that the first part and the second part are a unitary device (e.g., when the first set of teeth and the second set of teeth interlink) and to detach the first part from the second part in another configuration such that the first part and the second part are disconnected from one another. In this regard, the zipper comprises a different type of attachment than stitching or other permanent or non-reversible connection.

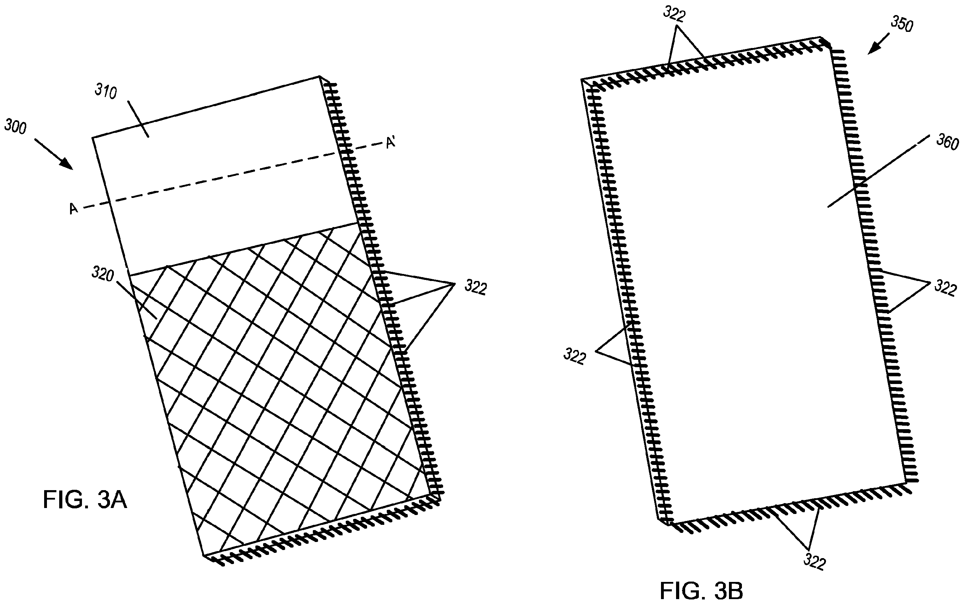

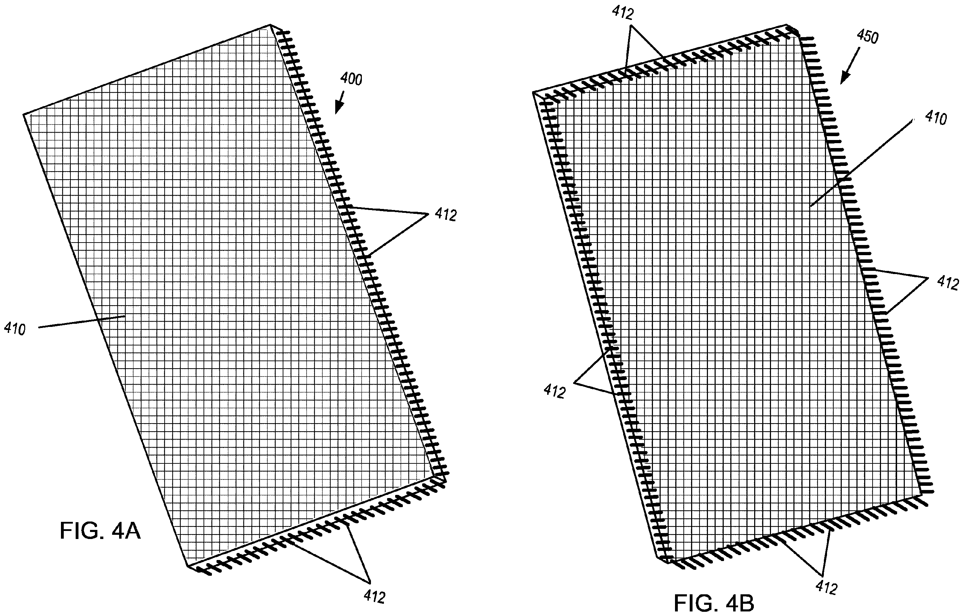

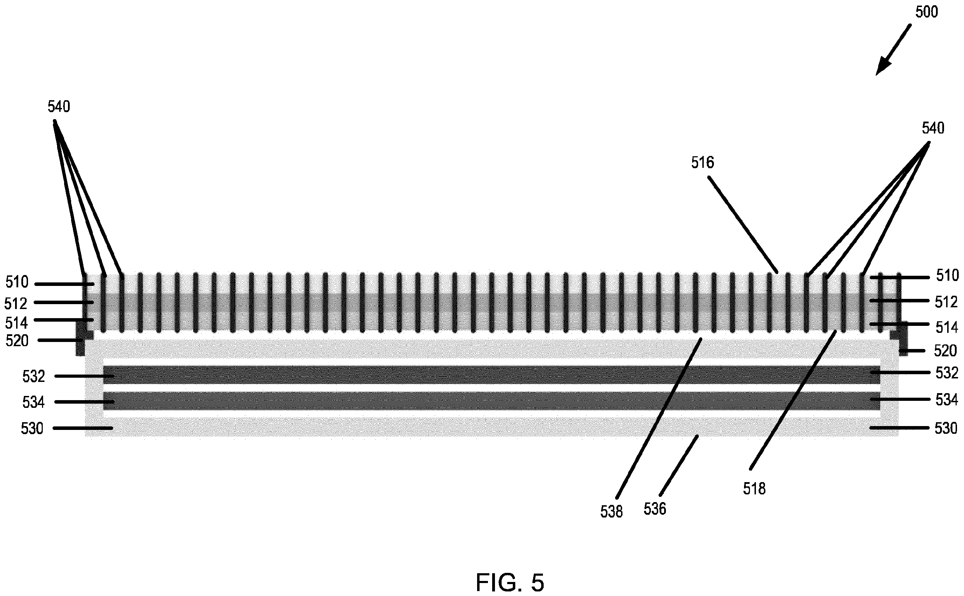

FIGS. 3A-5 illustrate various forms of the first part and the second part of the animal bedding, with FIGS. 3A-C illustrating the first part, FIGS. 4A-C illustrating the second part, and FIG. 5 illustrating both the first part and the second part connected to one another. In particular, FIG. 3A is a front perspective view 300 of a first part of the animal bedding, with a pocket 310 covering part of the top surface of the top layer 320 of the first part of the animal bedding (an example of the top surface of the top layer 320 is shown at 516 in FIG. 5), with a set of teeth 322 for one part of a zipper, and with the top layer 320 including a diamond stitching pattern. Set of teeth 322 may be connected (e.g., stitched or glued) to one, some or all of the layers of the first part. In practice, the guinea pig may sit on the top surface of the top layer 320 (e.g., may burrow underneath the pocket 310 while on the top surface of the top layer 320). An example of the top layer 320 is fleece layer 510, discussed below with regard to FIG. 5.

FIG. 3B is a bottom perspective view 350 of the first part of the animal bedding, illustrating a bottom surface of the protective layer 360 (an example of the bottom surface of the protective layer 360 is surface 518 of non-waterproof layer 514 in FIG. 5) and the set of teeth 322 for the one part of a zipper. An example of the protective layer 360 is non-waterproof layer 514, discussed below with regard to FIG. 5.

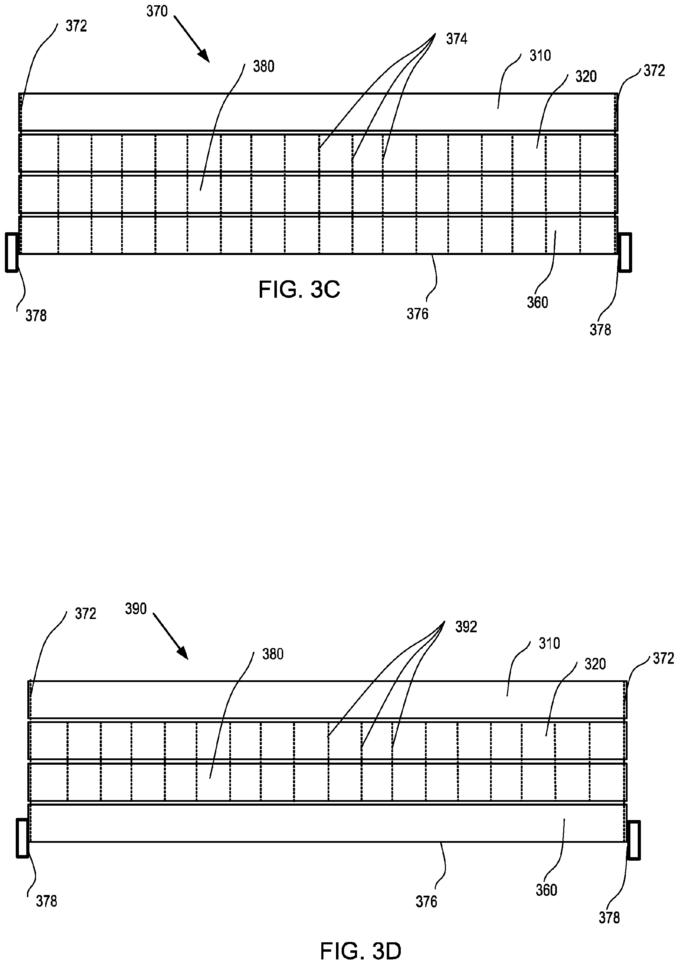

FIG. 3C is one example of a cross-sectional view 370 of A-A' from FIG. 3A. Pocket 310 may be attached to top layer 320. As shown in FIG. 3C, pocket 310 is attached to each of top layer 320, absorbent layer 380, and protective layer 360 via stitching 372. Alternatively, pocket 310 is not included. In one embodiment, even without pocket 310, stitching 372 is used to attach each of each of top layer 320, absorbent layer 380, and protective layer 360 together. Alternatively, without pocket 310, stitching is not included as well. Separately, top layer 320 and one or both of absorbent layer 380 and protective layer 360 may be connected via stitching. For example, each of top layer 320, absorbent layer 380, and protective layer 360 may be connected via stitching 374 (as illustrated in FIG. 3C), which may be separate from stitching 372. Further, protective layer 360 includes bottom surface 376, which may face the second part of the animal bedding when connected via zipper 378. Zipper 378 may be attached to the animal bedding in one or more places, such as to any one, any combination, or all of top layer 320, the absorbent layer 380, or the protective layer 360. As shown in FIG. 3C, zipper 378 is attached to the protective layer 360. The attachment of the zipper 378 to any one, any combination, or all of top layer 320, the absorbent layer 380, or the protective layer 360 may be in one of several ways, such as via glue, heat bonding, and/or stitching.

FIG. 3D is another example of a cross-sectional view 390 of A-A' from FIG. 3A. In contrast to FIG. 3C, top layer 320 is connected to absorbent layer 380 but not to protective layer 360 via stitching 392.

FIG. 4A is a bottom perspective view 400 of a second part of the animal bedding, with a bottom surface of the waterproof layer 410 shown (an example of the surface of the waterproof layer 410 is surface 536 of waterproof layer 530 in FIG. 5), and with a set of teeth 412 for a second part of a zipper designed to mate with the first part of the zipper shown in FIGS. 3A-B (e.g., set of teeth 322 interlock with set of teeth 412). Set of teeth 412 may be connected (e.g., stitched or glued) to one, some or all of the layers of the second part. According to the invention, waterproof layer 410 includes multiple levels, such as illustrated in FIG. 5.

As shown, both set of teeth 322 of the first part and set of teeth 412 of the second part are entirely around (or substantially entirely around) a perimeter of each of the first part and the second part. FIG. 4B is a top perspective view 450 of the second part of the animal bedding, illustrating the top surface of the waterproof layer 410 (an example of the top surface of the waterproof layer 410 is surface 538 of waterproof layer 530 in FIG. 5) and the set of teeth 412 for the second part of a zipper. It is noted that the waterproof layer illustrated in FIGS. 4A-B comprises a multi-leveled structure, such as illustrated by waterproof layer 530 in FIG. 5 inside which resides a cavity.

FIG. 5 is a side cross-sectional view of another example of animal bedding 500 with two parts that are connected to one another via a zipper 520. The first part comprises fleece layer 510, absorbent layer 512, non-waterproof layer 514, and the first part of zipper 520 (e.g., first set of teeth for the zipper 520). The second part comprises waterproof layer 530, cushion layer 532, plastic board 534, and second part of zipper 520 (e.g., the second set of teeth designed to interlock with the first set of teeth for the zipper 520). Thus, the absorbent layer 512, which may comprise bamboo or a bamboo blend, of the first part may be separated from the second part, such as from the waterproof layer 530 of the second part via one or more layers, such as non-waterproof layer 514.

Plastic board 534 may be composed of any type of plastic, such as synthetic or semi-synthetic materials that use polymers as an ingredient (such as a main ingredient). Merely by way of example, plastic board 534 may be composed of polyethylene.

As discussed above, a cushion layer (an example of which is 3D air mesh layer 214) may be used so that the animal bedding may be more comfortable for guinea pigs and may be better for the guinea pigs' joints. One example is cushion layer 532. Various examples of cushion layer 532 are contemplated. As one example, cushion layer 532 may comprise the 3D air mesh layer 214 discussed above. Alternatively, or in addition, cushion layer 532 may comprise one or more sponges (or one or more sponge layers), which may fill the cavity (apart from plastic board 534 inserted therein). In one embodiment, a first sponge is placed on top of a second sponge, with at least one aspect of the first sponge being different from the second sponges. As one example, the first sponge may be any one, any combination, or all of softer, less dense, or less firm than the second sponge. In particular, the first sponge may comprise a Polyurethane (PU) foam and the second sponge may comprise a Polyethylene (PE) foam. In this way, the cushion layer 532 may provide for shock absorbency for the animal.

As shown in FIG. 5, the cushion layer 532 is positioned above plastic board 534. Alternatively, cushion layers may be on either side of plastic board 534, such as directly above and/or directly below plastic board 534, or above plastic board 534 (with one or more intermediate layers) and/or below plastic board 534 (with one or more intermediate layers). Cushion layer 532 is different from plastic board 534 in one or more aspects, such as in rigidity with plastic board 534 being more rigid than cushion layer 532 (e.g., cushion layer 532 has more flexibility than plastic board 534).

The waterproof layer 530 comprises a multi-level structure and at least partly encircles one or both of cushion layer 532 and plastic board 534. For example, waterproof layer 530 may encircle at least on two sides of one or both of cushion layer 532 and plastic board 534, at least on three sides of one or both of cushion layer 532 and plastic board 534, or entirely encircle on all four sides of one or both of cushion layer 532 and plastic board 534.

According to the invention, waterproof layer 530 comprises multiple levels to form a cavity contained therein. The cavity of the waterproof layer 530 may include one or more internal cavity layers, such as a first interior cavity layer and a second interior cavity layer. In one or some embodiments, after inserting cushion layer 532 and plastic board 534 in the cavity (both of which may act as interior cavity layers), waterproof layer 530 may be permanently sealed (e.g., by applying heat to melt the opening of the waterproof layer 530 through which cushion layer 532 and plastic board 534 were inserted) such that no water may enter therein after permanent sealing. Alternatively, after inserting cushion layer 532 and plastic board 534 in the cavity, waterproof layer 530 may be temporarily sealed (e.g., via a zipper closing the opening of the waterproof layer through which cushion layer 532 and plastic board 534 were inserted) such that no water may enter therein after temporary sealing. In one or some embodiments, one or both of cushion layer 532 and plastic board 534 are at least ¼ inch (6,35 mm), at least 1/3 inch (8,47 mm), or at least ½ inch (12,7 mm). Thus, in one or some embodiments, the second part, which includes waterproof layer 530, cushion layer 532 and plastic board 534, may comprise a plastic mat with a cushion and/or rigid layer therein.

As discussed above, one or more of the layers may be used to absorb liquid, such as urine. For example, absorbent layer 512, which may be composed of bamboo or a bamboo blend, may be used to absorb the liquid. However, when washing the animal bedding, such as washing in a washing machine, shrinkage of the layer(s), such as shrinkage of the absorbent layer 212, 512, may occur. In order to reduce the potential for shrinkage, various types of animal bedding may be used in which one or more layers may be used as a protective layer to reduce shrinkage and/or to better maintain the shape of the animal bedding. In one or some embodiments, this protective layer may be in the form of a 3D mesh, such as 3D air mesh layer 214, whereby the rigidity of the 3D air mesh layer 214 may maintain or stretch the absorbent layer, thereby reducing shrinkage.

Alternatively, or in addition, this protective layer may be in the form of non-waterproof layer 514. As mentioned above, shrinkage may occur during washing. In that regard, prior to washing the animal bedding, such as animal bedding 500, the animal bedding may be separated into the two separate parts (e.g., unzipping the animal bedding so that the first part and the second part are no longer connected). In this way, the first part and the second part may be reversibly attached and detached, with detaching allowing the first part and the second part to be cleaned separately and in different ways. For example, first part (illustrated in FIGS. 3A-B) may be cleaned in a washing machine, whereas second part (illustrated in FIGS. 4A-B) may be cleaned by wiping down the waterproof layer 410 by hand with a disinfectant. Further, first part may likely need to be cleaned more often since it will become dirtier with urine/feces than second part. Therefore, first part alone may be cleaned more often than the second part, reducing wear on the second part. Because of this, the second part may be cleaned less than the first part, thereby lasting longer. Further, the animal bedding may last longer by only purchasing a new first part (after the original first part wears out from washing) without needing to purchase the second part, thereby being more ecologically friendly. In addition, because the first part is detached from the second part while cleaning, the first part may dry more quickly after removal from the washing machine. Finally, to the extent the first part may shrink from washing, when reattaching the second part to the first part (e.g., reconnecting the first part to the second part via the zipper), the second part, with the rigidity of plastic board 534, may stretch the first part to the extent any layer of the first part (such as absorbent layer 512) may have shrunk.

As discussed above, a protective layer, such as non-waterproof layer 514, may be used to protect the absorbent layer 512. The protective layer may abut absorbent layer 512 on one side (such as illustrated in FIG. 5). Alternatively, one or more intermediate layers may be in between the protective layer and the absorbent layer 512.

The non-waterproof layer 514 may be composed of any one or both of polyester (or other synthetic fiber) or cotton. For example, in one embodiment, the non-waterproof layer may comprise a thin cotton fabric, such as a thin fleece made with or without cotton. In particular, the thin fleece may have a lower gsm, such as less than 100 gsm, less than 200 gsm, or the like.

The protective layer may assist both when the first part and the second part are attached to one another and when the first part is detached from the second part. When the first part and the second part are connected, even if the absorbent layer 512 absorbs liquid, the protective layer may also be able to transmit liquids, such as urine, that passes from the absorbent layer 512 so that the liquid sits on top of the waterproof layer 530. When the first part and the second part are disconnected in order to wash the first part, the protective layer (e.g., the non-waterproof layer 514) may protect the absorbent layer 512 during the washing and/or drying process. The absorbent layer 512 may include batting, so that without the non-waterproof layer 514 as protection, the absorbent layer 512 may be damaged in the washing process.

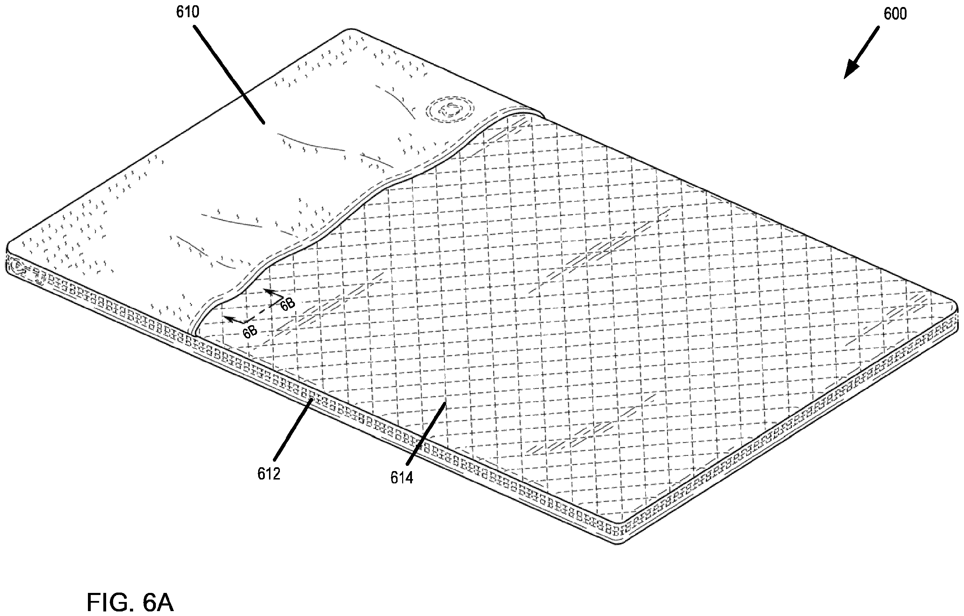

FIG. 6A is a second example of a front perspective view 600 of a first part of the animal bedding reversibly attached to a second part of the animal bedding using a zipper 612, with a pocket 610 covering part of the top layer of the first part of the animal bedding, with a set of teeth for one part of a zipper, and with the top layer including a diamond stitching pattern 614. As discussed above, various types of connections may reversibly attach the first part to the second part including any one, any combination, or all of: one or more zippers; one or more buttons; one or more strips of Velcro (or other type of hook-and-fastener, such as a first component featuring tiny hooks and a second component for mating with the first component featuring smaller loops); or one or more magnets.

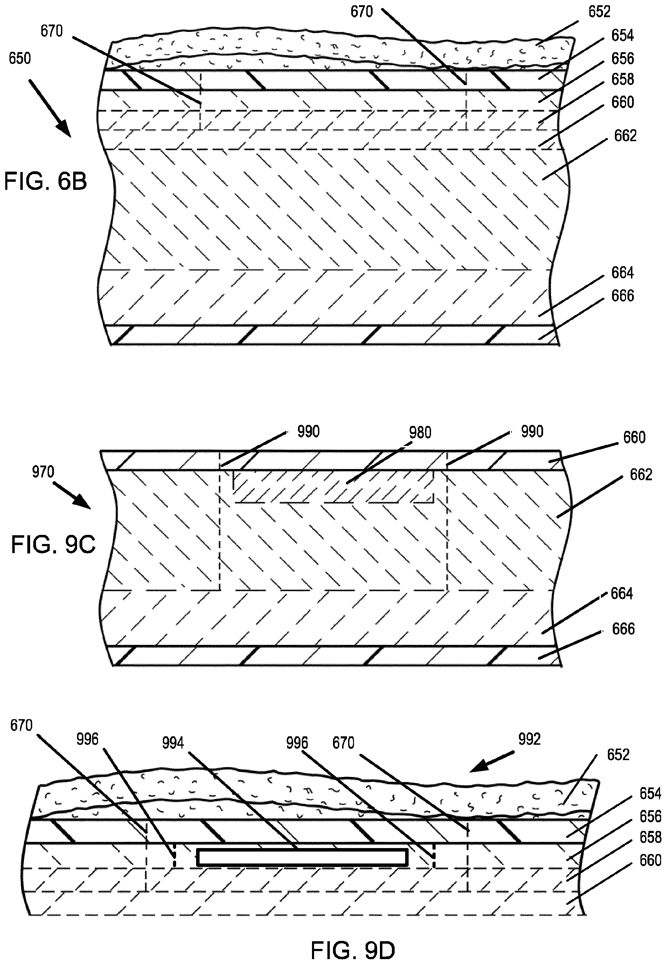

FIG. 6B is a cross-section 650 of a part of the animal bedding shown in FIG. 6A. FIG. 6B is an illustration when the first part and the second part are reversibly connective together. As shown in FIG. 6A, 652 may comprise a fleece pocket, 654 may comprise a fleece upper layer (shown in FIG. 6A), 656 may comprise a layer of any one, any combination, or all of: bamboo (e.g., for an absorbent layer); bamboo blend; cotton; cotton blend; synthetic (e.g., polyester); or synthetic blend, and 658 may act as a protective layer to layer 656 and may comprise any one, any combination, or all of: cotton; cotton blend; synthetic; or synthetic blend. In one or some embodiments, the first part may comprise any one, any combination, or all of: 652, 654, 656, or 658. As one example, the first part may or may not include pocket 652. As another example, in one embodiment, the first part may include each of layers 654, 656, and 658 (with or without pocket 652). Further, in such an embodiment, stitching 670 may stitch layer 654 with one or both of layers 656 and 658.

In the embodiment where layers 654 and 656 are present (but not 658) and where the pocket is present (e.g., layer 652), the thickness of layers 660, 662, 664, 666 may be exactly or approximately two times the thickness of layers 652, 654, 656. Alternatively, the thickness of layers 660, 662, 664, 666 may be exactly or approximately three times the thickness of layers 652, 654, 656. Still alternatively, the thickness of layers 660, 662, 664, 666 may be exactly or approximately four times the thickness of layers 652, 654, 656. Yet alternatively, the thickness of layers 660, 662, 664, 666 may be exactly or approximately five times the thickness of layers 652, 654, 656.

In one embodiment in which no pocket (e.g., layer 652) and layer 658 is present, the thickness of layers 660, 662, 664, 666 may be exactly or approximately two times the thickness of layers 654, 656, 658. Alternatively, the thickness of layers 660, 662, 664, 666 may be exactly or approximately three times the thickness of layers 654, 656, 658. Still alternatively, the thickness of layers 660, 662, 664, 666 may be exactly or approximately four times the thickness of layers 654, 656, 658. Yet alternatively, the thickness of layers 660, 662, 664, 666 may be exactly or approximately five times the thickness of layers 654, 656, 658.

Alternatively, the first part may include only 654 and 656 (without 658) and with or without pocket 652. In such an embodiment, layer 654 may be composed of cotton or fleece and layer 656 may be composed of a synthetic material (e.g., fleece), a synthetic blended with cotton, a cotton material, or the like. Further, layers 654 and 656 may be stitched together via stitching 670.

As discussed above, layer 660 may comprise flexible synthetic material (e.g., vinyl or polyvinyl chloride), layer 662 may comprise a cushion, layer 664 may comprise a rigid synthetic material (e.g., Poly Ethylene, Poly Propylene (PP), and Poly Ethylene Terephthalate (PET), and layer 666 may comprise a flexible synthetic material identical to layer 660. The first part, when unzipped to the second part, includes layers 652, 654, 656, 658. The second part, when unzipped to the first part, includes layers 660, 662, 664, 666.

In one embodiment, the thickness of layers 660, 662, 664, 666 may be exactly or approximately two times the thickness of layers 652, 654, 656, 658. Alternatively, the thickness of layers 660, 662, 664, 666 may be exactly or approximately three times the thickness of layers 652, 654, 656, 658. Still alternatively, the thickness of layers 660, 662, 664, 666 may be exactly or approximately four times the thickness of layers 652, 654, 656, 658. Yet alternatively, the thickness of layers 660, 662, 664, 666 may be exactly or approximately five times the thickness of layers 652, 654, 656, 658.

In one embodiment in which no pocket is present, the thickness of layers 660, 662, 664, 666 may be exactly or approximately two times the thickness of layers 654, 656, 658. Alternatively, the thickness of layers 660, 662, 664, 666 may be exactly or approximately three times the thickness of layers 654, 656, 658. Still alternatively, the thickness of layers 660, 662, 664, 666 may be exactly or approximately four times the thickness of layers 654, 656, 658. Yet alternatively, the thickness of layers 660, 662, 664, 666 may be exactly or approximately five times the thickness of layers 654, 656, 658.

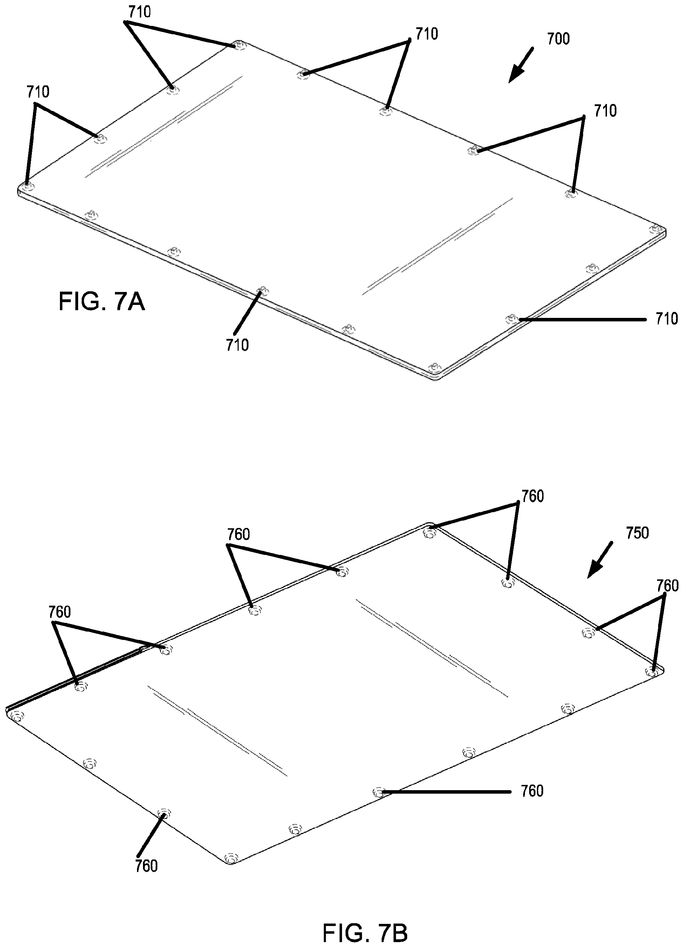

FIG. 7A is a top perspective view 700 of the second part of the animal bedding with a plurality of snaps or buttons 710 for connection to mating snaps or buttons 760 on the first part of the animal bedding illustrated in FIG. 7B. As shown, the snaps or buttons 710 may be distributed (such as evenly distributed) on the n-sided (such as 4-sided as shown in FIG. 7A) structure. In one embodiment, the snaps or buttons 710 are on each of the n-sided structure, such as on each of the 4 sides of the 4-sided structure. Alternatively, the snaps or buttons 710 are on fewer than all sides of the n-sided structure, such as on only two sides the 4-sided structure or such as on only three sides the 4-sided structure.

FIG. 7B is a bottom perspective view 750 of the first part of the animal bedding with a plurality of snaps or buttons 760 for a mating connection to the snaps or buttons 710 on the second part of the animal bedding illustrated in FIG. 7A. As shown, the snaps or buttons 760 may be distributed (such as evenly distributed) on the n-sided (such as 4-sided as shown in FIG. 7B) structure. Since snaps or buttons 760 are to mate with snaps or buttons 710, in one embodiment, the snaps or buttons 760 are on each of the n-sided structure, such as on each of the 4 sides of the 4-sided structure. Alternatively, the snaps or buttons 760 are on fewer than all sides of the n-sided structure, such as on only two sides the 4-sided structure or such as on only three sides the 4-sided structure.

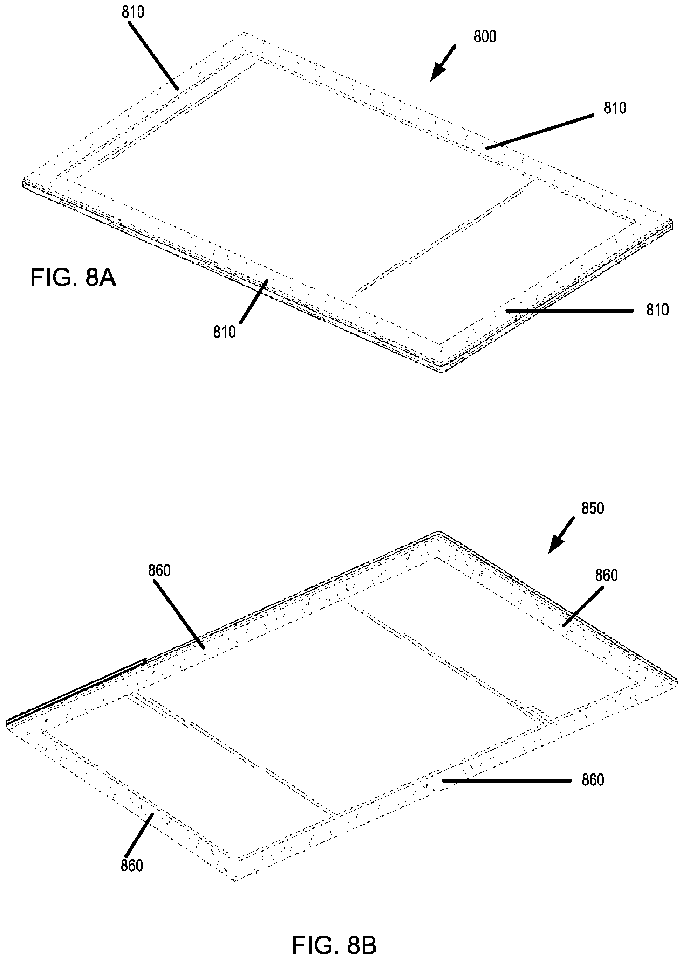

FIG. 8A is a top perspective view 800 of the second part of the animal bedding with Velcro 810 for connection to the first part of the animal bedding illustrated in FIG. 8B. Velcro is an example of hook-and-loop fasteners, hook-and-pile fasteners, touch fasteners, slidingly engaging fasteners, etc. In one or some embodiments, Velcro includes a first component (put on one of the first part or the second part) featuring tiny hooks, and a second component (put on the other of the first part or the second part) featuring smaller loops. When the first component and the second component are pressed together the hooks catch in the loops and the two pieces fasten or bind temporarily. When separated, by pulling or peeling the two surfaces apart, the strips make a distinctive ripping sound. As shown, the Velcro 810 may be positioned along a respective edge of the 4-sided structure. Further, in one embodiment, the Velcro 810 is on each side of the n-sided structure, such as on each side of the 4-sided structure. Alternatively, the Velcro 810 is on fewer than all sides of the n-sided structure, such as on only two sides the 4-sided structure or such as on only three sides the 4-sided structure. In addition, in one embodiment, the Velcro 810 is along an entire side of a respective side of the n-sided structure and on each of the sides, as shown in FIG. 8A. Alternatively, the Velcro 810 is along less than an entire side of the respective side of the n-sided structure (e.g., along no more than 50% of the length of the respective side; along no more than 60% of the length of the respective side; along no more than 70% of the length of the respective side; along no more than 80% of the length of the respective side; along no more than 90% of the length of the respective side; along no more than 95% of the length of the respective side).

FIG. 8B is a bottom perspective view 850 of the first part of the animal bedding with Velcro 860 for a mating connection to the second part of the animal bedding illustrated in FIG. 8A. As discussed above, one of the first part (illustrated in FIG. 8B) or the second part (illustrated in FIG. 8A) includes the first component of the Velcro and the other of the first part (illustrated in FIG. 8B) or the second part (illustrated in FIG. 8A) includes the second component of the Velcro. Further, similar to FIG. 8A, since the Velcro 860 is to mate with the Velcro 810, the Velcro 860 may be positioned along a respective edge of the 4-sided structure. Further, in one embodiment, the Velcro 860 is on each side of the n-sided structure, such as on each side of the 4-sided structure. Alternatively, the Velcro 860 is on fewer than all sides of the n-sided structure, such as on only two sides the 4-sided structure or such as on only three sides the 4-sided structure. In addition, in one embodiment, the Velcro 860 is along an entire side of a respective side of the n-sided structure and on each of the sides, as shown in FIG. 8B. Alternatively, the Velcro 860 is along less than an entire side of the respective side of the n-sided structure (e.g., along no more than 50% of the length of the respective side; along no more than 60% of the length of the respective side; along no more than 70% of the length of the respective side; along no more than 80% of the length of the respective side; along no more than 90% of the length of the respective side; along no more than 95% of the length of the respective side).

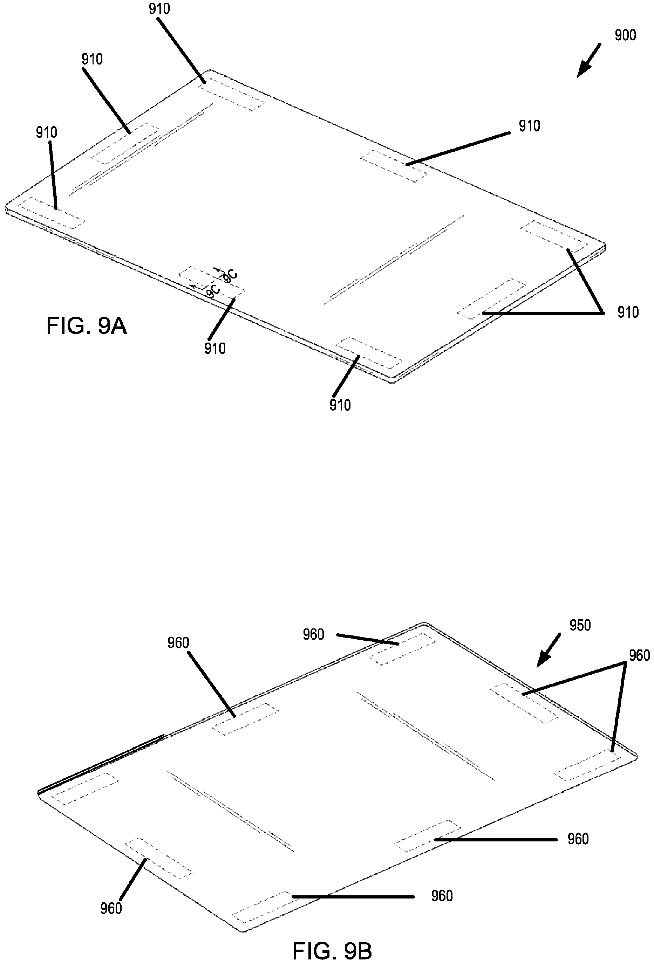

FIG. 9A is a top perspective view 900 of the second part of the animal bedding with a plurality of magnets (2180 shown in FIG. 9C) for connection to the first part of the animal bedding illustrated in FIG. 9B. For example, a plurality of magnets of a first polarity may be positioned on (or within) the first part (shown in FIG. 9B) and a plurality of magnets of second polarity opposite the first polarity may be positioned on (or within) the second part (shown in FIG. 9A). Stitching 910 is shown where the magnets are sewn into the interior of the second part (depicted in FIG. 9A). Again, alternatively, the magnets may be placed on the surface of the second part (rather than put in the interior of the second part).

FIG. 9B is a bottom perspective view 950 of the first part of the animal bedding with opposite polarity of a plurality of magnets for connection to the second part of the animal bedding illustrated in FIG. 9A. Stitching 960 is shown where the magnets are sewn into the interior of the first part (depicted in FIG. 9B). Again, alternatively, the magnets may be placed on the surface of the first part (rather than put in the interior of the first part).

FIG. 9C is a cross-section 970 of the second part of the animal bedding shown in FIG. 9A. As discussed above, a plurality of layers may be included in the second part, such as illustrated in FIG. 6B. Further, a magnet 980 may be embedded into of the layers, such as any one, any combination, or all of: layers 660; 662; 664; or 666. As shown in FIG. 9C, the magnet 980 is included or embedded in cushion layer 662. Stitching 990 may be used to secure magnet 980 into the respective layer.

FIG. 9D is a cross-section 992 of the first part of the animal bedding shown in FIG. 9B. As discussed above, a plurality of layers may be included in the first part, such as illustrated in FIG. 6B. Further, a magnet 994 may be embedded into of the layers, such as any one, any combination, or all of: layers 654; 656; 658; or 660. As shown in FIG. 9D, the magnet 994 is included or embedded in layer 656. Stitching 996 may be used to secure magnet 994 into the respective layer.

## Claims

1. Animal bedding (300, 350, 370, 390, 400, 450, 500, 600, 800, 850, 900, 950) comprising:
a first part (300, 370, 390, 950) comprising:
an upper layer (320, 510); and
a lower layer (360, 514); and
a second part (350, 400, 450, 800, 900);
wherein a first type of attachment (322, 378, 412, 520; 810, 860; 910, 960, 994) is configured to attach the first part (300, 370, 390, 950) to the second part (350, 400, 450, 800, 900); and
wherein a second type of attachment (372, 374, 670) attaches the upper layer (320, 510) to the lower layer (360, 514),
wherein the second type of attachment (372, 374, 670) is of a different type than the first type of attachment (322, 378, 412, 520; 810, 860; 910, 960, 994), wherein the second type of attachment (372, 374, 670) comprises a permanent or non-reversible type of attachment,
and wherein the first type of attachment (322, 378, 412, 520; 810, 860; 910, 960, 994) is configured to reversibly attach the first part (300, 370, 390, 950) to the second part (350, 400, 450, 800, 900) and detach the first part (300, 370, 390, 950) from the second part (350, 400, 450, 800, 900),
**characterized in that** the second part includes a multi-leveled structure that includes waterproof layers (410, 530) attached to one another to form a cavity contained therein.

2. The animal bedding of claim 1, wherein the first type of attachment (322, 378, 412, 520; 810, 860; 910, 960, 994) comprises a first attachment part (378, 760, 860, 960) connected in or on the first part (300, 370, 390, 950) and a second attachment part (810, 910) connected in or on the second part (350, 400, 450, 800, 900);
wherein the first attachment part is configured to interact with the second attachment part in order to reversibly attach the first part (300, 370, 390, 950) to the second part (350, 400, 450, 800, 900) and detach the first part (300, 370, 390, 950) from the second part (350, 400, 450, 800, 900); and
wherein the first type of attachment (322, 378, 412, 520; 810, 860; 910, 960, 994) is one of: a zipper; magnets; buttons; or hooks and loops.

3. The animal bedding of claim 2, wherein the first attachment part comprises a first set of teeth (322) of a zipper (378; 520; 612);
wherein the second attachment part comprises a second set of teeth (412) of a zipper (378; 520; 612); and
wherein the first set of teeth (322) and the second set of teeth (412) interlink with one another in order to reversibly attach the first part (300, 370, 390, 950) to the second part (350, 400, 450, 800, 900);
wherein the first part (300, 370, 390, 950) includes the first set of teeth (322) along at least a part of a periphery of the first part (300, 370, 390, 950); and
wherein the second part (350, 400, 450, 800, 900) includes the second set of teeth (412) along at least a part of a periphery of the second part (350, 400, 450, 800, 900).

4. The animal bedding of claim 3, wherein the first set of teeth (322) are positioned along an entire periphery of the first part (300, 370, 390, 950); and
wherein the second set of teeth (412) are positioned along an entire periphery of the second part (350, 400, 450, 800, 900).

5. The animal bedding of claim 2,
wherein the first type of attachment (322, 378, 412, 520; 810, 860; 910, 960, 994) comprises a magnetic attachment with one or more first polarity magnets and one or more second polarity magnets, which when pressed together, the one or more first polarity magnets and the one or more second polarity magnets are magnetically attracted to one another to reversibly connect the first part (300, 370, 390, 950) with the second part (350, 400, 450, 800, 900);
wherein the first attachment part comprises the one or more first polarity magnets; and
wherein the second attachment part comprises the one or more second polarity magnets.

6. The animal bedding of claim 5, wherein the one or more first polarity magnets have an opposite polarity to the one or more second polarity magnets;
wherein the one or more first polarity magnets are positioned between the upper layer (320, 510) and the lower layer (360, 514) such that the one or more first polarity magnets are encircled within the first part (300, 370, 390, 950);
wherein the second part (350, 400, 450, 800, 900) comprises a plurality of waterproof layers (216; 410; 530) which the one or more second polarity magnets are positioned.

7. The animal bedding of claim 2,
wherein the first type of attachment (322, 378, 412, 520; 810, 860; 910, 960, 994) comprises one of hooks or loops on the first part (300, 370, 390, 950) for connection to the other of the hooks or loops on the second part (350, 400, 450, 800, 900), which when pressed together, the one of hooks or loops and the other of the hooks or loops interlock with one another to reversibly connect the first part (300, 370, 390, 950) with the second part (350, 400, 450, 800, 900);
wherein the first attachment part comprises the one of hooks or loops; and
wherein the second attachment part comprises the other of the hooks or loops.

8. The animal bedding of claim 1, wherein the second part (350, 400, 450, 800, 900) comprises an entirely encircled waterproof layer (216; 410; 530) within which resides the cavity; and
wherein one or more interior cavity layers are positioned within the cavity of the encircled waterproof layer (216; 410; 530).

9. The animal bedding of claim 8, wherein the one or more interior cavity layers comprise a first interior cavity layer and a second interior cavity layer; and
wherein the first interior cavity layer and the second interior cavity layer are positioned within the cavity of the encircled waterproof layer (216; 410; 530), wherein the second interior cavity layer is more rigid than the first interior cavity layer.

10. The animal bedding of claim 9, wherein the first interior cavity layer comprises a cushion layer (214; 532; 662);
wherein the second interior cavity layer comprises a plastic layer; and
wherein when the first part (300, 370, 390, 950) is attached to the second part (350, 400, 450, 800, 900), the cushion layer (214; 532; 662) is positioned closer to the first part (300, 370, 390, 950) than the plastic layer.

11. The animal bedding of claim 1, further comprising a cushion layer (214; 532; 662) within the cavity.

12. The animal bedding of claim 11, wherein the cushion layer (214; 532; 662) comprises a 3D air mesh layer (1414).

13. The animal bedding of claim 1, further comprising a rigid synthetic layer (534; 664) within the cavity.

14. The animal bedding of claim 1, wherein the lower layer (360, 514) comprises a protective layer (360); and wherein the protective layer (360) comprises a 3D mesh layer (1414).

15. The animal bedding of claim 1, further comprising a pocket (310) that is attached to the upper layer (320, 510).

## Patentansprüche

1. Tierbettung (300, 350, 370, 390, 400, 450, 500, 600, 800, 850, 900, 950) umfassend:
ein erstes Teil (300, 370, 390, 950), das umfasst:
eine obere Schicht (320, 510); und
eine untere Schicht (360, 514); und
ein zweites Teil (350, 400, 450, 800, 900);
wobei eine erste Art von Befestigung (322, 378, 412, 520; 810, 860; 910, 960, 994) dazu konfiguriert ist, das erste Teil (300, 370, 390, 950) an dem zweiten Teil (350, 400, 450, 800, 900) zu befestigen; und
wobei eine zweite Art von Befestigung (372, 374, 670) die obere Schicht (320, 510) an der unteren Schicht (360, 514) befestigt,
wobei
die zweite Art von Befestigung (372, 374, 670) von einer anderen Art als die erste Art von Befestigung (322, 378, 412, 520; 810, 860; 910, 960, 994) ist, wobei die zweite Art von Befestigung (372, 374, 670) eine permanente oder nicht reversible Art von Befestigung umfasst,
und wobei
die erste Art von Befestigung (322, 378, 412, 520; 810, 860; 910, 960, 994) dazu konfiguriert ist, das erste Teil (300, 370, 390, 950) reversibel an dem zweiten Teil (350, 400, 450, 800, 900) zu befestigen und das erste Teil (300, 370, 390, 950) von dem zweiten Teil (350, 400, 450, 800, 900) zu lösen,
**dadurch gekennzeichnet, dass**
das zweite Teil eine mehrstufige Struktur beinhaltet, die wasserdichte Schichten (410, 530) beinhaltet, die aneinander befestigt sind, um einen darin enthaltenen Hohlraum zu bilden.

2. Tierbettung nach Anspruch 1, wobei die erste Art von Befestigung (322, 378, 412, 520; 810, 860; 910, 960, 994) ein erstes Befestigungsteil (378, 760, 860, 960), das in oder an dem ersten Teil (300, 370, 390, 950) verbunden ist, und ein zweites Befestigungsteil (810, 910), das in oder an dem zweiten Teil (350, 400, 450, 800, 900) verbunden ist, umfasst;
wobei das erste Befestigungsteil dazu konfiguriert ist, mit dem zweiten Befestigungsteil zusammenzuwirken, um das erste Teil (300, 370, 390, 950) reversibel an dem zweiten Teil (350, 400, 450, 800, 900) zu befestigen und das erste Teil (300, 370, 390, 950) von dem zweiten Teil (350, 400, 450, 800, 900) zu lösen; und
wobei die erste Art von Befestigung (322, 378, 412, 520; 810, 860; 910, 960, 994) eine ist von: einem Reißverschluss; Magneten; Knöpfen; oder Haken und Schlaufen.

3. Tierbettung nach Anspruch 2, wobei das erste Befestigungsteil einen ersten Satz Zähne (322) eines Reißverschlusses (378; 520; 612) umfasst;
wobei das zweite Befestigungsteil einen zweiten Satz Zähne (412) eines Reißverschlusses (378; 520; 612) umfasst; und
wobei der erste Satz Zähne (322) und der zweite Satz Zähne (412) miteinander verzahnen, um das erste Teil (300, 370, 390, 950) reversibel an dem zweiten Teil (350, 400, 450, 800, 900) zu befestigen;
wobei das erste Teil (300, 370, 390, 950) den ersten Satz Zähne (322) entlang zumindest eines Teils eines Umfangs des ersten Teils (300, 370, 390, 950) beinhaltet; und
wobei das zweite Teil (350, 400, 450, 800, 900) den zweiten Satz Zähne (412) entlang zumindest eines Teils eines Umfangs des zweiten Teils (350, 400, 450, 800, 900) beinhaltet.

4. Tierbettung nach Anspruch 3, wobei der erste Satz Zähne (322) entlang eines gesamten Umfangs des ersten Teils (300, 370, 390, 950) positioniert ist; und
wobei der zweite Satz Zähne (412) entlang des gesamten Umfangs des zweiten Teils (350, 400, 450, 800, 900) positioniert ist.

5. Tierbettung nach Anspruch 2,
wobei die erste Art von Befestigung (322, 378, 412, 520; 810, 860; 910, 960, 994) eine magnetische Befestigung mit einem oder mehreren Magneten erster Polarität und einem oder mehreren Magneten zweiter Polarität umfasst, wobei, wenn sie zusammengedrückt werden, der eine oder die mehreren Magnete erster Polarität und der eine oder die mehreren Magnete zweiter Polarität magnetisch aneinander angezogen werden, um das erste Teil (300, 370, 390, 950) reversibel mit dem zweiten Teil (350, 400, 450, 800, 900) zu verbinden;
wobei das erste Befestigungsteil den einen oder die mehreren Magnete erster Polarität umfasst; und
wobei das zweite Befestigungsteil einen oder mehrere Magnete zweiter Polarität umfasst.

6. Tierbettung nach Anspruch 5, wobei der eine oder die mehreren Magnete erster Polarität eine entgegengesetzte Polarität zu dem einen oder den mehreren Magneten zweiter Polarität aufweisen;
wobei der eine oder die mehreren Magnete erster Polarität zwischen der oberen Schicht (320, 510) und der unteren Schicht (360, 514) so positioniert sind, dass der eine oder die mehreren Magnete erster Polarität innerhalb des ersten Teils (300, 370, 390, 950) eingekreist sind;
wobei der zweite Teil (350, 400, 450, 800, 900) eine Vielzahl wasserdichter Schichten (216; 410; 530) umfasst, in denen der eine oder die mehreren Magnete der zweiten Polarität positioniert sind.

7. Tierbettung nach Anspruch 2,
wobei die erste Art von Befestigung (322, 378, 412, 520; 810, 860; 910, 960, 994) einen von Haken oder Schlaufen am ersten Teil (300, 370, 390, 950) zur Verbindung mit dem anderen von Haken oder Schlaufen am zweiten Teil (350, 400, 450, 800, 900) umfasst, wobei, wenn sie zusammengedrückt werden, der eine von Haken oder Schlaufen und der andere von Haken oder Schlaufen ineinandergreifen, um das ersten Teil (300, 370, 390, 950) reversibel mit dem zweiten Teil (350, 400, 450, 800, 900) zu verbinden;
wobei das erste Befestigungsteil den einen von Haken oder Schlaufen umfasst; und
wobei das zweite Befestigungsteil den anderen von Haken oder Schlaufen umfasst.

8. Tierbettung nach Anspruch 1, wobei das zweite Teil (350, 400, 450, 800, 900) eine vollständig eingekreiste wasserdichte Schicht (216; 410; 530) umfasst, in der sich der Hohlraum befindet; und
wobei eine oder mehrere innere Hohlraumschichten innerhalb des Hohlraums der eingekreisten wasserdichten Schicht (216; 410; 530) positioniert sind.

9. Tierbettung nach Anspruch 8, wobei die eine oder mehreren inneren Hohlraumschichten eine erste innere Hohlraumschicht und eine zweite innere Hohlraumschicht umfassen; und
wobei die erste innere Hohlraumschicht und die zweite innere Hohlraumschicht innerhalb des Hohlraums der eingekreisten wasserdichten Schicht (216; 410; 530) positioniert sind, wobei die zweite innere Hohlraumschicht steifer ist als die erste innere Hohlraumschicht.

10. Tierbettung nach Anspruch 9, wobei die erste innere Hohlraumschicht eine Polsterschicht (214; 532; 662) umfasst;
wobei die zweite innere Hohlraumschicht eine Kunststoffschicht umfasst; und
wobei, wenn das erste Teil (300, 370, 390, 950) an dem zweiten Teil (350, 400, 450, 800, 900) befestigt ist, die Polsterschicht (214; 532; 662) näher an dem ersten Teil (300, 370, 390, 950) positioniert ist als die Kunststoffschicht.

11. Tierbettung nach Anspruch 1, ferner umfassend eine Polsterschicht (214; 532; 662) innerhalb des Hohlraums.

12. Tierbettung nach Anspruch 11, wobei die Polsterschicht (214; 532; 662) eine 3D-Airmesh-Schicht (1414) umfasst.

13. Tierbettung nach Anspruch 1, ferner umfassend eine starre synthetische Schicht (534; 664) innerhalb des Hohlraums.

14. Tierbettung nach Anspruch 1, wobei die untere Schicht (360, 514) eine Schutzschicht (360) umfasst; und wobei die Schutzschicht (360) eine 3D-Mesh-Schicht (1414) umfasst.

15. Tierbettung nach Anspruch 1, ferner umfassend eine Tasche (310), die an der oberen Schicht (320, 510) befestigt ist.

## Revendications

1. Litière pour animaux (300, 350, 370, 390, 400, 450, 500, 600, 800, 850, 900, 950) comprenant :
une première partie (300, 370, 390, 950) comprenant :
une couche supérieure (320, 510) ; et
une couche inférieure (360, 514) ; et
une seconde partie (350, 400, 450, 800, 900) ;
un premier type de fixation (322, 378, 412, 520 ; 810, 860 ; 910, 960, 994) étant conçu pour fixer la première partie (300, 370, 390, 950) à la seconde partie (350, 400, 450, 800, 900) ; et
un second type de fixation (372, 374, 670) fixant la couche supérieure (320, 510) à la couche inférieure (360, 514),
ledit second type de fixation (372, 374, 670) étant d'un type différent du premier type de fixation (322, 378, 412, 520 ; 810, 860 ; 910, 960, 994), ledit second type de fixation (372, 374, 670) comprenant un type de fixation permanent ou non réversible,
et
ledit premier type de fixation (322, 378, 412, 520 ; 810, 860 ; 910, 960, 994) étant conçu pour fixer de manière réversible la première partie (300, 370, 390, 950) à la seconde partie (350, 400, 450, 800, 900) et détacher la première partie (300, 370, 390, 950) de la seconde partie (350, 400, 450, 800, 900),
**caractérisée en ce que**
la seconde partie comprend une structure à plusieurs niveaux qui comprend des couches imperméables (410, 530) fixées les unes aux autres pour former une cavité contenue à l'intérieur.

2. Litière pour animaux de la revendication 1, ledit premier type de fixation (322, 378, 412, 520 ; 810, 860 ; 910, 960, 994) comprenant une première partie de fixation (378, 760, 860, 960) raccordée dans ou sur la première partie (300, 370, 390, 950) et une seconde partie de fixation (810, 910) raccordée dans ou sur la seconde partie (350, 400, 450, 800, 900) ;
ladite première partie de fixation étant conçue pour interagir avec la seconde partie de fixation afin de fixer de manière réversible la première partie (300, 370, 390, 950) à la seconde partie (350, 400, 450, 800, 900) et de détacher la première partie (300, 370, 390, 950) de la seconde partie (350, 400, 450, 800, 900) ; et
ledit premier type de fixation (322, 378, 412, 520 ; 810, 860 ; 910, 960, 994) étant une parmi : une fermeture à glissière ; des aimants ; des boutons ; ou une fermeture autoagrippante.

3. Litière pour animaux de la revendication 2, ladite première partie de fixation comprenant un premier ensemble de dents (322) d'une fermeture à glissière (378 ; 520 ; 612) ;
ladite seconde partie de fixation comprenant un second ensemble de dents (412) d'une fermeture à glissière (378 ; 520 ; 612) ; et
ledit premier ensemble de dents (322) et ledit second ensemble de dents (412) étant reliés l'un à l'autre afin de fixer de manière réversible la première partie (300, 370, 390, 950) à la seconde partie (350, 400, 450, 800, 900) ;
ladite première partie (300, 370, 390, 950) comprenant le premier ensemble de dents (322) le long d'au moins une partie d'une périphérie de la première partie (300, 370, 390, 950) ; et
ladite seconde partie (350, 400, 450, 800, 900) comprenant le second ensemble de dents (412) le long d'au moins une partie d'une périphérie de la seconde partie (350, 400, 450, 800, 900).

4. Litière pour animaux de la revendication 3, ledit premier ensemble de dents (322) étant positionné le long d'une périphérie entière de la première partie (300, 370, 390, 950) ; et
ledit second ensemble de dents (412) étant positionné le long d'une périphérie entière de la seconde partie (350, 400, 450, 800, 900).

5. Litière pour animaux de la revendication 2,
ledit premier type de fixation (322, 378, 412, 520 ; 810, 860 ; 910, 960, 994) comprenant une fixation magnétique avec un ou plusieurs aimants de première polarité et un ou plusieurs aimants de seconde polarité, lesquels lorsqu'ils sont pressés ensemble, ledit ou lesdits aimants de première polarité et ledit ou lesdits aimants de seconde polarité sont attirés magnétiquement l'un vers l'autre pour raccorder de manière réversible la première partie (300, 370, 390, 950) à la seconde partie (350, 400, 450, 800, 900) ;
ladite première partie de fixation comprenant le ou les aimants de première polarité ; et
ladite seconde partie de fixation comprenant le ou les aimants de seconde polarité.

6. Litière pour animaux de la revendication 5, ledit ou lesdits aimants de première polarité comportant une polarité opposée à celle du ou des aimants de seconde polarité ;
ledit ou lesdits aimants de première polarité étant positionnés entre la couche supérieure (320, 510) et la couche inférieure (360, 514) de sorte que ledit ou lesdits aimants de première polarité soient encerclés à l'intérieur de la première partie (300, 370, 390, 950) ;
ladite seconde partie (350, 400, 450, 800, 900) comprenant une pluralité de couches imperméables (216 ; 410 ; 530) lesquelles le ou les aimants de seconde polarité sont positionnés.

7. Litière pour animaux de la revendication 2,
ledit premier type de fixation (322, 378, 412, 520 ; 810, 860 ; 910, 960, 994) comprenant l'un des crochets ou des boucles de la première partie (300, 370, 390, 950) pour le raccordement à l'autre des crochets ou des boucles de la seconde partie (350, 400, 450, 800, 900), lorsqu'ils sont pressés ensemble, ledit un des crochets ou boucles et ledit autre des crochets ou boucles s'imbriquent l'un dans l'autre pour raccorder de manière réversible la première partie (300, 370, 390, 950) à la seconde partie (350, 400, 450, 800, 900) ;
ladite première partie de fixation comprenant ledit un des crochets ou des boucles ; et ladite seconde partie de fixation comprenant ledit autre des crochets ou des boucles.

8. Litière pour animaux de la revendication 1, ladite seconde partie (350, 400, 450, 800, 900) comprenant une couche imperméable à l'eau entièrement encerclée (216 ; 410 ; 530) à l'intérieur de laquelle réside la cavité ; et
une ou plusieurs couches de cavité intérieures sont positionnées à l'intérieur de la cavité de la couche imperméable encerclée (216 ; 410 ; 530).

9. Litière pour animaux de la revendication 8, ladite ou lesdites couches de cavité intérieures comprenant une première couche de cavité intérieure et une deuxième couche de cavité intérieure ; et
ladite première couche de cavité intérieure et ladite seconde couche de cavité intérieure étant positionnées à l'intérieur de la cavité de la couche imperméable à l'eau encerclée (216 ; 410 ; 530), ladite seconde couche de cavité intérieure étant plus rigide que la première couche de cavité intérieure.

10. Litière pour animaux de la revendication 9, ladite première couche de cavité intérieure comprenant une couche de coussin (214 ; 532 ; 662) ;
ladite seconde couche de cavité intérieure comprenant une couche de plastique ; et
lorsque la première partie (300, 370, 390, 950) est fixée à la seconde partie (350, 400, 450, 800, 900), ladite couche de coussin (214 ; 532 ; 662) étant positionnée plus près de la première partie (300, 370, 390, 950) que la couche de plastique.

11. Litière pour animaux de la revendication 1, comprenant en outre une couche de coussin (214 ; 532 ; 662) à l'intérieur de la cavité.

12. Litière pour animaux de la revendication 11, ladite couche de coussin (214 ; 532 ; 662) comprenant une couche de maille d'air 3D (1414).

13. Litière pour animaux de la revendication 1, comprenant en outre une couche synthétique rigide (534 ; 664) à l'intérieur de la cavité.

14. Litière pour animaux de la revendication 1, ladite couche inférieure (360, 514) comprenant une couche de protection (360) ; et ladite couche de protection (360) comprenant une couche de maille 3D (1414).

15. Litière pour animaux de la revendication 1, comprenant en outre une poche (310) qui est fixée à la couche supérieure (320, 510).
